# EUROPEAN PATENT SPECIFICATION

(11) **EP 4 308 617 B1**
(45) Date of publication and mention of the grant of the patent: **11.03.2026**
(21) Application number: 22703484.0
(22) Date of filing: 14.01.2022
(51) Int. Cl.: C08F 220/18, C09D 133/08, D06M 15/244, D06M 15/263, D06M 15/285, D06M 15/333, D06M 15/248

(54) **SILICONE - (METH) ACRYLATE COPOLYMER FORMULATION AND PROCESSES FOR PREPARATION AND USE THEREOF**
SILIKON-(METH)ACRYLATCOPOLYMERFORMULIERUNG UND VERFAHREN ZUR HERSTELLUNG UND VERWENDUNG DAVON
FORMULATION DE COPOLYMÈRE DE SILICONE-(MÉTH)ACRYLATE ET SES PROCÉDÉS DE PRÉPARATION ET D'UTILISATION

(30) Priority: 15.03.2021 US 202163160969 P
(43) Date of publication of application: 24.01.2024
(73) Proprietor: Dow Silicones Corporation, Midland, MI 48686-0994 (US); Rohm and Haas Company, Collegeville, PA 19426 (US)
(72) Inventor: JELETIC, Matthew, Midland, MI 48686-0994 (US); CHOI, Jongwook, Midland, MI 48686-0994 (US); MECCA, Jodi, Midland, MI 48686-0994 (US); DOMBROWSKI, Gary, Collegeville, PA 19426 (US); MCLAUGHLIN, Matthew, Midland, MI 48686-0994 (US); HASSO, Douglas, Midland, MI 48686-0994 (US)
(74) Representative: Murgitroyd & Company
(86) International application number: PCT/US2022/012403
(87) International publication number: WO 2022/197350

(56) References cited:
- WO-A1-2018/186139
- JP-A- 2017 218 713

## Description

### CROSS REFERENCE TO RELATED APPLICATIONS

This application claims the benefit of PCT Patent Application Serial No. PCT/US22/012403 and U.S. Provisional Patent Application Serial No. 63/160,969 filed on 15 March 2021 under 35 U.S.C. §119 (e).

### TECHNICAL FIELD

A silicone - (meth)acrylate copolymer and method for its preparation are provided. The copolymer is useful for treating textiles to impart durable water repellency thereto.

### INTRODUCTION

In water repellent textile treatment applications, fluorocarbon materials have dominated the market due to their ability to provide excellent durable water repellency. However, regulatory and customer pressures are contributing to an industry need for non-fluorocarbon-based textile treatments. Previously disclosed fluorocarbon-free textile treatments suffer the drawback of providing poor durability, where water repellency of textiles treated therewith decreases significantly after multiple washings. JP2017-218713 discloses a fluorine-free water repellant and water repellency processing method. WO2018/186139 discloses an oil-in-water emulsion composition, production method and use thereof.

### SUMMARY

A silicone - (meth)acrylate copolymer (copolymer) and methods for its preparation are disclosed. An emulsion formulation containing the copolymer is suitable for treating a textile.

### DETAILED DESCRIPTION

The silicone - (meth)acrylate copolymer (copolymer) comprises unit formula: 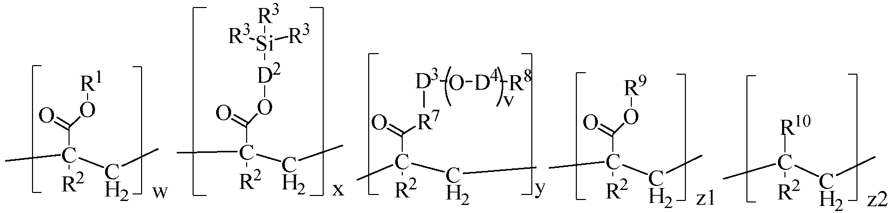
where each R¹ is an independently selected alkyl group of 16 to 24 carbon atoms; each R² is independently selected from the group consisting of H and methyl; each D² is a divalent hydrocarbon group of 2 to 12 carbon atoms; each R³ is a group of formula OSi(R⁴)₃; where each R⁴ is independently selected from the group consisting of R and DSi(R⁵)₃, where each R is an independently selected monovalent hydrocarbon group of 1 to 12 carbon atoms, and each D is independently selected from the group consisting of an oxygen atom, a (poly)alkylene oxide group of 1 to 12 units, and a divalent hydrocarbon group of 2 to 4 carbon atoms; each R⁵ is independently selected from the group consisting of R and DSi(R⁶)₃; where each R⁶ is independently selected from the group consisting of R and DSiR₃; with the proviso that R⁴, R⁵, and R⁶ are selected such that the silicone - (meth)acrylate macromonomer unit with subscript x has at least 6 silicon atoms; each R⁷ is independently selected from the group consisting of an oxygen atom and NH; D³ is a divalent hydrocarbon group of 1 to 12 carbon atoms; D⁴ is an alkylene group of 2 to 4 carbon atoms or a divalent alkylarylene group; subscript v represents the number of units of formula (OD⁴) in the unit with subscript y, and subscript v has a value of 0 to 12; each R⁸ is a crosslinkable group; each R⁹ is a monovalent hydrocarbon group of 1 to 14 carbon atoms; each R¹⁰ is independently selected from the group consisting of a halogen (e.g., chloride), an acetate group, or a monovalent hydrocarbon group of 1 to 14 carbon atoms;
subscripts w, x, y, z1, and z2 represent relative weights of each unit in the copolymer, subscript x has a value of 0.25 to 15; subscript w has a value of 80 to 98.75; subscript y has a value of 1 to 5; subscript z1 has a value of 0 to 18.75; and subscript z2 has a value of 0 to 18.75, and a quantity (w + x + y + z1 + z2) = 100. The copolymer further comprises a terminal moiety.

In the unit formula above, R¹ has 16 to 24 carbon atoms. Alternatively, R¹, may have 16 to 22 carbon atoms, alternatively 18 to 24 carbon atoms, and alternatively 18 to 22 carbon atoms. R¹ may be selected from the group consisting of stearyl, eicosyl, and behenyl. Alternatively, R¹ may be stearyl.

In the unit formula above, each R³ is a group of formula OSi(R⁴)₃; where each R⁴ is independently selected from the group consisting of R and DSi(R⁵)₃, where each R is an independently selected monovalent hydrocarbon group of 1 to 12 carbon atoms, and each D is independently selected from the group consisting of an oxygen atom, a (poly)alkylene oxide group of 1 to 12 units, and a divalent hydrocarbon group of 2 to 4 carbon atoms; each R⁵ is independently selected from the group consisting of R and DSi(R⁶)₃; where each R⁶ is independently selected from the group consisting of R and DSiR₃; with the proviso that R⁴, R⁵, and R⁶ are selected such that the silicone - (meth)acrylate macromonomer unit with subscript x has at least 6 silicon atoms. Alternatively, R⁴, R⁵, and R⁶ are selected such that the unit has at least 6 silicon atoms, alternatively 6 to 20 silicon atoms, alternatively 7 to 19 silicon atoms, alternatively 8 to 18 silicon atoms, alternatively 9 to 17 silicon atoms, and alternatively 10 to 16 silicon atoms, per unit.

In the silicone - (meth)acrylate macromonomer unit, each R is a monovalent hydrocarbon group of 1 to 12 carbon atoms. The monovalent hydrocarbon group for R may be an alkyl group, such as an alkyl group of 1 to 6 carbon atoms. Alternatively, the alkyl groups may have 1 to 3 carbon atoms, alternatively 1 to 2 carbon atoms. Alternatively, each R group may be methyl.

Each D is independently selected from the group consisting of an oxygen atom, a (poly)alkylene oxide group of 1 to 12 units, and a divalent hydrocarbon group of 2 to 4 carbon atoms. Each D² is a divalent hydrocarbon group of 2 to 12 carbon atoms. Alternatively, D² may have 2 to 10, alternatively 3 to 5, and alternatively 3 carbon atoms. Each D³ is a divalent hydrocarbon group of 1 to 12 carbon atoms. Alternatively, each D³ may be an alkylene group; alternatively ethylene. D⁴ is an alkylene group of 2 to 4 carbon atoms or a divalent alkylarylene group.

The divalent hydrocarbon group for D⁴ may be exemplified by an alkylene group such as ethylene, propylene, or butylene; an arylene group such as phenylene, or an alkylarylene group such as: 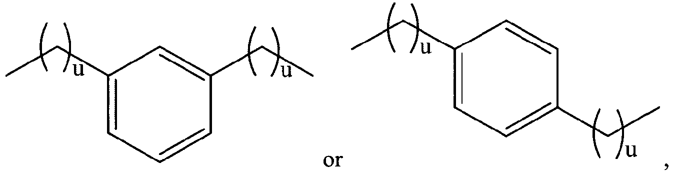 where each subscript u is independently 1 to 6, alternatively 1 to 2. Alternatively, the divalent hydrocarbon group may be alkylene, and alternatively the divalent hydrocarbon group may be ethylene. The divalent hydrocarbon group for D² and D³ may be as described above, and alternatively may be methylene. The divalent hydrocarbon group for D may be alkylene, such as ethylene, propylene, or butylene. Alternatively each D may be ethylene.

The (poly)alkylene oxide group for D may have 2 to 4 carbon atoms per unit, e.g., have formula D⁵(OD⁶)_{v'}-OR, where D⁵ is an alkylene group of 2 to 4 carbon atoms, D⁶ is an alkylene group of 2 to 4 carbon atoms, R is as described above, and subscript v' is 0 to 12. Alternatively subscript v' may be 0 or 1. Alternatively, subscript v' may be 0. Examples of (poly)alkylene oxide groups include ethyleneoxide-propyleneoxide.

Alternatively, each D may be selected from an oxygen atom and a divalent hydrocarbon group. Alternatively, each divalent hydrocarbon group for D may be an alkylene group such as ethylene. Alternatively, each D may be oxygen. Alternatively, some instances of D may be oxygen and other instances of D may be alkylene in the same unit.

In the unit formula above each R⁷ is independently selected from the group consisting of an oxygen atom and NH. Alternatively, each R⁷ may be oxygen.

In the unit formula above, each R⁸ is a crosslinkable group. Each R⁸ may be independently selected from the group consisting of hydroxy, amino, epoxy, ureido, and acetoxy. Alternatively, each R⁸ may be independently selected from the group consisting of hydroxy and ureido, and alternatively each R⁸ may be hydroxy.

In the unit formula above, each R⁹ is a monovalent hydrocarbon group, which is free of aliphatic unsaturation and which may be linear, branched, or cyclic (i.e., monocyclic or polycyclic), or combinations thereof. R⁹ may be an alkyl group or an aryl group, which may be monocyclic or polycyclic, and which may optionally have linear or branched groups. Examples of suitable alkyl groups for R⁹ may include methyl, t-amyl, butyl (including t-butyl), cyclohexyl, iso-decyl, isobornyl, and 2-ethylhexyl. Examples of suitable aryl groups include phenyl, naphthyl, anthracyl, and benzyl.

In the unit formula above, R¹⁰ may be a halide, an acetate, or a monovalent hydrocarbon group, as described above for R⁹. The halide may be bromide (Br), chloride (Cl), fluoride (F) or iodide (I); alternatively Br, Cl or F; alternatively Br or Cl; and alternatively Cl.

In the unit formula above, subscripts w, x, y, and z are relative weights of each unit, and a quantity (w + x + y + z) may total 100. Subscript w has a value of 80 to 98.75. Alternatively, subscript w may be at least 80, alternatively at least 81, alternatively at least 82, alternatively at least 83, alternatively at least 84, and alternatively at least 85. At the same time, subscript w may be up to 98.75, alternatively up to 98, alternatively up to 97, alternatively up to 96, alternatively up to 97, alternatively up to 96, alternatively up to 95, alternatively up to 94, alternatively up to 93, alternatively up to 92, alternatively up to 91, and alternatively up to 90. Alternatively, subscript w may be 80 to 98, alternatively 81 to 97, alternatively 82 to 96, alternatively 82 to 95, and alternatively 85 to 90.

Subscript x has a value of 0.25 to 15. Alternatively, subscript x is at least 0.25, alternatively at least 0.5, alternatively at least 0.75, alternatively at least 1, alternatively at least 2, alternatively at least 3, alternatively at least 4, alternatively at least 5. At the same time, subscript x may be up to 15, alternatively up to 14, alternatively up to 13, alternatively up to 12, alternatively up to 11, and alternatively up to 10. Alternatively, subscript x may be 1 to 14, alternatively 2 to 13, alternatively 3 to 12, alternatively 4 to 11, alternatively 5 to 10, alternatively 5 to 15; and alternatively 10.

Subscript y has a value of 1 to 5. Alternatively, subscript y may be at least 1, alternatively at least 1.25, alternatively at least 1.5, alternatively at least 2, and alternatively at least 1.75. At the same time, subscript y may be up to 5, alternatively up to 4, alternatively up to 3, alternatively up to 2.75, alternatively up to 2.5, and alternatively up to 2.25. Alternatively, subscript y may be 1 to 3, alternatively 1 to 2, alternatively 1.5 to 2.5, alternatively 1.75 to 2.25, and alternatively 2.

Subscript z1 may be 0. Alternatively, subscript z1 may be at least 0.5, alternatively at least 1, and alternatively at least 2; while at the same time, subscript z1 may be up to 18.75, alternatively up to 15, alternatively up to 10, alternatively up to 8, and alternatively up to 5. Alternatively, subscript z1 may be 0 to 18.75, alternatively > 0 to 18.75, alternatively 0.5 to 7, alternatively 1 to 6, and alternatively 2 to 5.

Subscript z2 may be 0. Alternatively, subscript z2 may be at least 0.5, alternatively at least 1, and alternatively at least 2; while at the same time, subscript z2 may be up to 8, alternatively up to 7, alternatively up to 6, alternatively up to 5, and alternatively up to 4. Alternatively, subscript z2 may be 0 to 8, alternatively > 0 to 8, alternatively 0.5 to 7, alternatively 1 to 6, and alternatively 2 to 5.

The total number of units per molecule of copolymer is not specifically restricted. However, the copolymer may have a number average molecular weight of 100,000 g/mol to 4,000,000 g/mol; alternatively 200,000 g/mol to 3,000,000 g/mol measured by GPC using the method described below. The units shown above may be in any order, e.g., the copolymer may be a random copolymer or a block copolymer.

One skilled in the art would recognize that the copolymer may be prepared by radical polymerization, via a process as described below, and that this process would form the terminal moiety for the copolymer. The copolymer further comprises a terminal moiety which may be derived from an initiator, a chain transfer agent, or both, as described, for example in Odian, George (2004). Principles of Polymerization (4th ed.). New York: Wiley-Interscience. ISBN 978-0-471-27400-1.

The copolymer may be prepared via a process comprising:
1) copolymerizing starting materials comprising
   80 weight % to 98.75 weight % of (A) a crystallizable monomer of formula 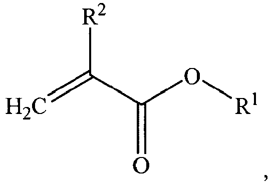 where R¹ is an alkyl group of 16 to 24 carbon atoms as described above, and R² is selected from the group consisting of H and methyl, as described above;
   0.25 weight % to 15 weight % of (B) a silicone - (meth)acrylate macromonomer of formula 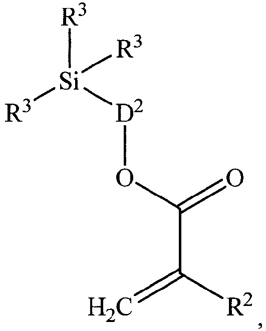 where each R³ is a group of formula OSi(R⁴)₃; each R⁴ is independently selected from the group consisting of R and DSi(R⁵)₃, where each R is an independently selected monovalent hydrocarbon group of 1 to 12 carbon atoms; each D is independently selected from the group consisting of an oxygen atom, a (poly)alkylene oxide group of 1 to 12 units, and a divalent hydrocarbon group of 2 to 4 carbon atoms; each R⁵ is independently selected from the group consisting of R and DSi(R⁶)₃; where each R⁶ is independently selected from the group consisting of R and DSiR₃; with the proviso that R⁴, R⁵, and R⁶ are selected such that the macromonomer has at least 6 silicon atoms per molecule, as described above;
   1 weight % to 5 weight % of C) a crosslinkable (meth)acrylate monomer of formula 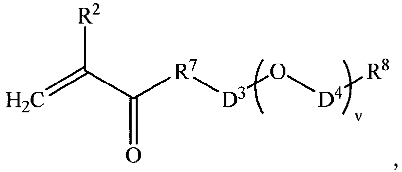 R⁷ is independently selected from oxygen and NH, D³ is a divalent hydrocarbon group of 1 to 12 carbons, D⁴ is a divalent group of 2 to 4 carbon atoms, subscript v is 0 to 12, and R⁸ is a crosslinkable group, each as described above;
   (D) a surfactant;
   (E) water; and
   (I) an initiator;
thereby forming an aqueous emulsion comprising (F) the silicone - (meth)acrylate copolymer, (D) the surfactant, and (E) the water. The process for preparing the emulsion formulation suitable for preparing the textile may comprise practicing step 1) described above, and 2) combining the aqueous emulsion prepared in step 1) and an additional starting material comprising (G) a water dispersible crosslinker.

One or more additional starting materials may be added in step 1). For example, a starting material selected from the group consisting of (H) a chain transfer agent; (J) an additional non-crystallizable monomer that is distinct from each of (A), (B) and (C); (K) an inhibitor; and a combination of two or more of (H), (J), and (K) may be added in step 1).

Step 1) of the process described above may comprise forming an emulsion comprising starting materials (A), (B), (C), (D), (E), and (I) (and optionally (H), (J), and/or (K)). If starting material (A) is a solid at RT, the starting materials may be heated to a temperature and for a time sufficient to melt starting material (A), *e.g.,* 30 °C to 50 °C for 5 minutes to 15 minutes. The resulting starting materials may be mixed under shear to form the aqueous emulsion. Mixing under shear may be performed by any convenient means for forming an aqueous emulsion, such as sonication and with subsequent microfluidization. Equipment for mixing under shear, such as sonicators, homogenizers, microfluidizers, and speedmixers are known in the art and are commercially available. Without wishing to be bound by theory, it is thought that mixing under shear may be used to obtain a submicron particle size in the emulsion. In step 1), starting materials comprising (A), (B), (C), and (I) (and when present (H) and (J)) copolymerize to form (F) the silicone - (meth)acrylate copolymer in the aqueous emulsion with starting materials (D) and (E) (and when present, (K)).

This aqueous emulsion prepared in step 1) can be subsequently used to prepare an emulsion formulation useful for treating a textile by 2) adding starting material (G), a water dispersible crosslinker to the emulsion formed as described above. Step 2) may optionally further comprise adding an additional starting material, which may be selected from the group consisting of (L) a wax, (M) a biocide, (N) additional water (which may be the same as starting material (E)), (O) a flame retardant, (P) a wrinkle reducing agent, (Q) an antistatic agent, (R) a penetrating agent and a combination of two or more of starting materials (L), (M), (N), (O),(P), (Q) and (R). Step 2) may optionally add additional (D)

Step 2) of the process described above may be performed by any convenient means, such as mixing using in a jacketed vessel equipped with an agitator. Step 1) and step 2) may be performed sequentially in the same vessel. Alternatively, step 1) and step 2) may be performed in different equipment. Step 1) and/or step 2) may be performed at RT or elevated temperature, *e.g.,* up to 100°C, alternatively 40°C to 80°C. Alternatively, heating may be performed in step 1) and step 2) may be performed at RT. Alternatively, one or both of steps 1) and 2) may be performed at lower temperatures and elevated pressures, such as up to 5 atmospheres.

Alternatively, the copolymer described above may be prepared by a method comprising dissolving one or more of the starting materials in an organic solvent (such as a monohydric alcohol) and copolymerizing starting materials (A), (B), (C), (I), and when present (H) and/or (J) in a process such as that disclosed in U.S. Patent 10,047,199 to Iimura et al. by varying appropriate starting materials and their amounts. The resulting copolymer may be solvent borne. All or a portion of the solvent may be removed by any convenient means, such as by stripping or distillation with heat and optionally reduced pressure. The copolymer may be emulsified using (D) the surfactant and (E), the water, and the other starting materials from step 2) of the method described above. The starting materials for making the copolymer, and the emulsion formulation comprising the copolymer, are further described below.

Starting material (A) is a crystallizable monomer of formula (A-1): 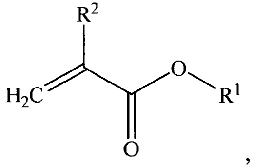 where R¹ and R² are as described above. Examples of crystallizable monomers for starting material (A) include stearyl (meth)acrylate, eicosyl (meth)acrylate, behenyl (meth)acrylate, and combinations thereof. Alternatively, when R² is hydrogen, starting material (A) may be an acrylate selected from stearyl acrylate, eicosyl acrylate, behenyl acrylate, and combinations thereof. Crystallizable monomers suitable for starting material (A) are commercially available, e.g., from Millipore Sigma of St. Louis, Missouri, USA and from BASF SE of Ludwigshafen, Germany. Crystallizable means that the starting monomer has a melting point) ≥ 25 °C ± 5 °C.

Starting material (A) is used in an amount of 80% to 98.75%, based on combined weights of starting materials (A), (B), and (C), and when present (J). The amount of starting material (A) may be at least 80%, alternatively at least 81%, alternatively at least 82%, alternatively at least 83%, alternatively at least 84%, and alternatively at least 85% on the same basis. At the same time, the amount of starting material (A) may be up to 98.75%, alternatively up to 98%, alternatively up to 97%, alternatively up to 96%, alternatively up to 97%, alternatively up to 96%, alternatively up to 95%, alternatively up to 94%, alternatively up to 93%, alternatively up to 92%, alternatively up to 91%, and alternatively up to 90%, on the same basis. Alternatively, the amount of starting material (A) may be 80% to 98%, alternatively 81% to 97%, alternatively 82% to 96%, alternatively 82% to 95%, alternatively 85% to 90%; on the same basis.

Starting material (B) is a silicone - (meth)acrylate macromonomer of formula (B-1): 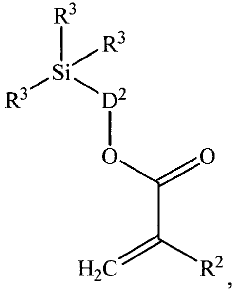 where R², D², and R³ are as described above.

Alternatively, starting material (B) may comprise formula (B-2): 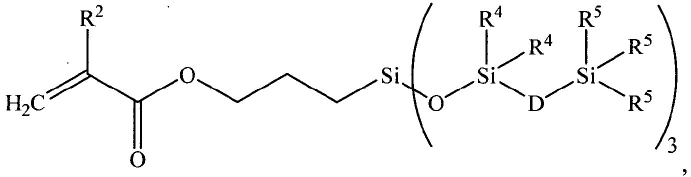 where R², R⁴, and R⁵ are as described above.

Alternatively, starting material (B) may comprise a macromonomer selected from the group consisting of:
3-(5-((1,1,1,3,5,5,5-heptamethyltrisiloxan-3-yl)oxy)-1,1,1,3,7,9,9,9-octamethyl-3,7-bis((trimethylsilyl)oxy)pentasiloxan-5-yl)propyl methacrylate of formula 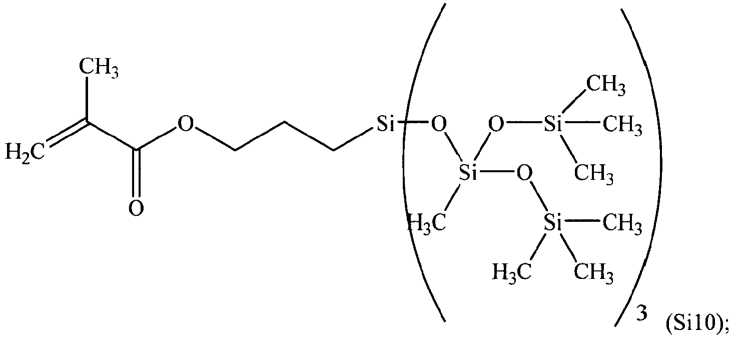 3-(1,5-bis(2-(1,1,1,5,5,5-hexamethyl-3-((trimethylsilyl)oxy)trisiloxan-3-yl)ethyl)-3-(((2-(1,1,1,5,5,5-hexamethyl-3-((trimethylsilyl)oxy)trisiloxan-3-yl)ethyl)dimethylsilyl)oxy)-1,1,5,5-tetramethyltrisiloxan-3-yl)propyl methacrylate, which has formula 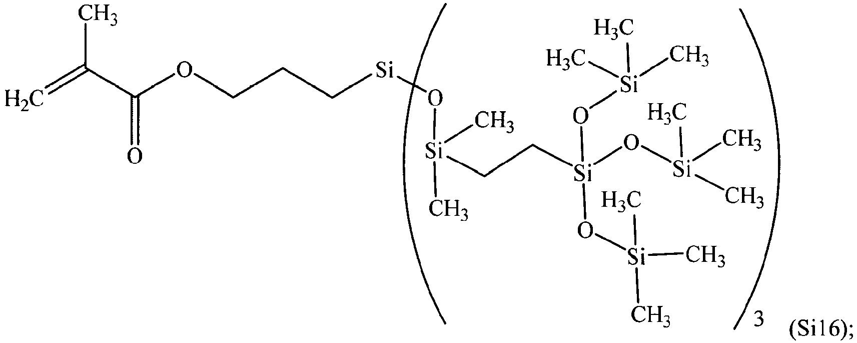 and a combination thereof. Starting material (B) may be prepared by known methods, such as those disclosed in PCT Publication WO2020/142388 and U.S. Patent 6,420,504.

Starting material (B) is used in an amount of 0.25% to 15%, based on combined weights of starting materials (A), (B), and (C), and when present (J). Alternatively, starting material (B) may be used in an amount of at least 0.25%, alternatively at least 0.5%, alternatively at least 0.75%, alternatively at least 1%, alternatively at least 2%, alternatively at least 3%, alternatively at least 4%, alternatively at least 5%, on the same basis. At the same time, starting material (B) may be present in an amount up to 15%, alternatively up to 14%, alternatively up to 13%, alternatively up to 12%, alternatively up to 11%, and alternatively up to 10%, on the same basis. Alternatively, the amount of starting material (B) may be 1% to 14%, alternatively 2% to 13%, alternatively 3% to 12%, alternatively 4% to 11%, alternatively 5% to 10%, alternatively 5% to 15%; and alternatively 10%, on the same basis described above.

### Starting Material (C) Crosslinkable (Meth)acrylate Monomer

Starting material (C) is a crosslinkable (meth)acrylate monomer. The crosslinkable (meth)acrylate monomer may have formula (C-1): 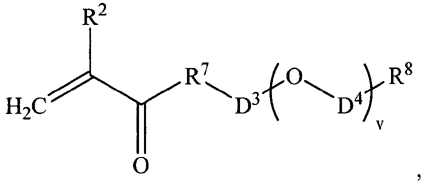 where R², R⁷, D³, R⁸, and subscript v are as described above. Examples of suitable crosslinkable (meth)acrylates for starting material (C) include (2-acetoacetoxy)ethyl methacrylate, hydroxybutyl (meth)acrylate, hydroxyethyl (meth)acrylate, hydroxyethylcaprolactone (meth)acrylate, hydroxypropyl (meth)acrylate, ureido (meth)acrylate, glycidyl (meth)acrylate (GMA), poly(ethylene glycol) (meth)acrylate (PEGMA), and combinations thereof. The ureido (meth)acrylate monomer may have formula (C-2): 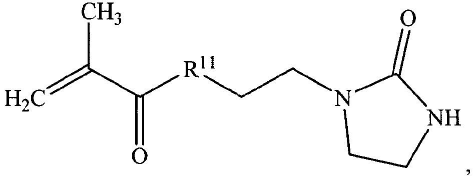 where R¹¹ is an oxygen atom or an NH moiety. Examples of ureido monomers are known in the art and are disclosed, for example, in U.S. Patent 9,212,292 to Pressley, et al. Other crosslinkable (meth)acrylate monomers are known in the art and are commercially available, *e.g*., from BASF SE. Other crosslinkable (meth)acrylates are commercially available as Sipomer WAM1 and 2.

Alternatively, starting material (C), the crosslinkable (meth)acrylate monomer may be (C-3) (meth)acrylic acid. Acrylic acid and methacrylic acid are commercially available from Sigma-Aldrich, Inc. of St. Louis, Missouri, USA.

Starting material (C) is used in an amount 1% to 5%, based on combined weights of starting materials (A), (B), and (C), and when present, (J). The amount of starting material (C) may be at least 1%, alternatively at least 1.25%, alternatively at least 1.5%, alternatively at least 2%, and alternatively at least 1.75%, on the same basis. At the same time, the amount of starting material (C) may be up to 5%, alternatively up to 4%, alternatively up to 3%, alternatively up to 2.75%, alternatively up to 2.5%, and alternatively up to 2.25%, on the same basis. Alternatively, the amount of starting material (C) may be 1% to 3%, alternatively 1% to 2%, alternatively 1.5% to 2.5%, alternatively 1.75% to 2.25%, and alternatively 2%; on the same basis.

### Starting Material (D) Surfactant

Starting material (D) is a surfactant. The surfactant may be selected from the group consisting of (D-1) a cationic surfactant, (D-2) a nonionic surfactant, and (D-3) a combination of both the cationic surfactant and the nonionic surfactant. Cationic surfactants useful herein include compounds containing quaternary ammonium hydrophilic moieties in the molecule which are positively charged, such as quaternary ammonium salts, which may be represented by formula (D-1-1): R¹²R¹³R¹⁴R¹⁵N⁺X'⁻ where R¹² to R¹⁵ are alkyl groups containing 1-30 carbon atoms, or alkyl groups derived from tallow, coconut oil, or soy; and X' is a halogen, e.g., chlorine or bromine. Alternatively, the quaternary ammonium compounds may be alkyl trimethylammonium and dialkyldimethylammonium halides, or acetates, having at least 8 carbon atoms in each alkyl substituent. Dialkyl dimethyl ammonium salts can be used and are represented by formula (D-1-2): R¹⁶R¹⁷N⁺(CH₃)₂X'⁻ where R¹⁶ and R¹⁷ are alkyl groups containing 12-30 carbon atoms or alkyl groups derived from tallow, coconut oil, or soy; and X' is halogen. Monoalkyl trimethyl ammonium salts can be used and are represented by formula (D-1-3): R¹⁸3⁺(CH₃)₃X"⁻ where R¹⁸ is an alkyl group containing 12-30 carbon atoms or an alkyl group derived from tallow, coconut oil, or soy; and X" is halogen or acetate.

Representative quaternary ammonium halide salts are dodecyltrimethyl ammonium chloride/lauryltrimethyl ammonium chloride (LTAC), cetyltrimethyl ammonium chloride (CTAC), hexadeclyltrimethyl ammonium chloride, didodecyldimethyl ammonium bromide, dihexadecyldimethyl ammonium chloride, dihexadecyldimethyl ammonium bromide, dioctadecyldimethyl ammonium chloride, dieicosyldimethyl ammonium chloride, and didocosyldimethyl ammonium chloride. These quaternary ammonium salts are commercially available under trademarks such as ADOGEN^{™}, ARQUAD^{™}, TOMAH^{™}, and VARIQUAT^{™},

Other suitable cationic surfactants which can be used include fatty acid amines and amides and their salts and derivatives, such as aliphatic fatty amines and their derivatives. Such cationic surfactants that are commercially available include compositions sold under the names ARQUAD^{™} T27 W, ARQUAD^{™} 16-29, by Akzo Nobel Chemicals Inc., Chicago, Illinois; and Ammonyx Cetac-30 by the Stepan Company, Northfield, Illinois, USA.

The amount of (D-1) the cationic surfactant may be 0.1% to 5%, based on weight of starting material (F) the silicone - (meth)acrylate copolymer in the aqueous emulsion. Alternatively, the amount of cationic surfactant may be at least 0.1%, alternatively at least 0.2%, alternatively at least 0.3%, alternatively at least 0.4%, alternatively at least 0.5%; while at the same time the amount of cationic surfactant may be up to 5%, alternatively up to 4%, alternatively up to 3%, alternatively up to 2%, alternatively up to 1%, on the same basis. Alternatively, the amount of cationic surfactant may be 0.2% to 4%, alternatively 0.3% to 3%, alternatively 0.4% to 2.5%, and alternatively 0.5% to 2%; on the same basis.

Starting material (D-2) is a nonionic surfactant. Some suitable nonionic surfactants which can be used include polyoxyethylene alkyl ethers, polyoxyethylene alkyl phenyl ethers, alkylglucosides, polyoxyethylene fatty acid esters, sorbitan fatty acid esters, and polyoxyethylene sorbitan fatty acid esters. Nonionic surfactants which are commercially available include compositions such as (i) 2,6,8-trimethyl-4-nonyl polyoxyethylene ether sold under the names TERGITOL^{™} TMN-6 and TERGITOL^{™} TMN-10; (ii) the C11-15 secondary alkyl polyoxyethylene ethers sold under the names TERGITOL^{™} 15-S-7, TERGITOL^{™} 15-S-9, TERGITOL^{™} 15-S-15, TERGITOL^{™} 15-S-30, and TERGITOL^{™} 15-S-40, by the Dow Chemical Company, of Midland, Michigan, USA; octylphenyl polyoxyethylene (40) ether sold under the name TRITON^{™} X405 by the Dow Chemical Company; (iii) nonylphenyl polyoxyethylene (10) ether sold under the name MAKON^{™} 10 by the Stepan Company; (iv) ethoxylated alcohols sold under the name Trycol 5953 by Henkel Corp./Emery Group, of Cincinnati, Ohio, USA; (v) ethoxylated alcohols sold under the name BRIJ^{™} L23 and BRIJ^{™} L4 by Croda Inc. of Edison, New Jersey, USA, (vi) alkyl-oxo alcohol polyglycol ethers such as GENAPOL^{™} UD 050, and GENAPOL^{™} UD110, (vii) alkyl polyethylene glycol ether based on C10-Guerbet alcohol and ethylene oxide such as LUTENSOL^{™} XP 79.

Suitable nonionic surfactants also include poly(oxyethylene)-poly(oxypropylene)-poly(oxyethylene) tri-block copolymers. Poly(oxyethylene)-poly(oxypropylene)-poly(oxyethylene) tri-block copolymers are also commonly known as *Poloxamers.* They are nonionic triblock copolymers composed of a central hydrophobic chain of polyoxypropylene (poly(propylene oxide)) flanked by two hydrophilic chains of polyoxyethylene (poly(ethylene oxide)). Poly(oxyethylene)-poly(oxypropylene)-poly(oxyethylene) tri-block copolymers are commercially available from BASF of Florham Park, New Jersey, USA, and are sold under the tradename PLURONIC^{™}, such as PLURONIC^{™} L61, L62, L64, L81, P84.

Other suitable nonionic surfactants include polyoxyethylene alkyl ethers, polyoxyethylene alkylphenol ethers, polyoxyethylene lauryl ethers, polyoxyethylene sorbitan monooleates, polyoxyethylene alkyl esters, polyoxyethylene sorbitan alkyl esters, polyethylene glycol (such as polyethylene glycol having 23 ethylene-oxide units), polypropylene glycol, diethylene glycol, ethoxylated trimethylnonanols, and polyoxyalkylene glycol modified polysiloxane surfactants. Commercially available nonionic surfactants which can be used include compositions such as 2,6,8-trimethyl-4-nonyloxy polyethylene oxyethanols (6EO) and (10EO) sold under the trademarks TERGITOL^{™} TMN-6 and TERGITOL^{™} TMN-10; alkyleneoxy polyethylene oxyethanol (C₁₁₋₁₅ secondary alcohol ethoxylates 7EO, 9EO, and 15EO) sold under the trademarks TERGITOL^{™} 15-S-7, TERGITOL^{™} 15-S-9, TERGITOL^{™} 15-S-15; other C₁₁₋₁₅ secondary alcohol ethoxylates sold under the trademarks TERGITOL^{™} 15-S-12, 15-S-20, 15-S-30, 15-S-40; octylphenoxy polyethoxy ethanol (40EO) sold under the trademark TRITON^{™} X-405; and alcohol ethoxylates with tradename ECOSURF^{™} EH, such as ECOSURF^{™} EH-40. All of these surfactants are sold by the Dow Chemical Company.

Other useful commercial nonionic surfactants are nonylphenoxy polyethoxy ethanol (10EO) sold under the trademark MAKON^{™} 10 by Stepan Company; polyoxyethylene 23 lauryl ether (Laureth-23) sold commercially under the trademark BRIJ^{™} 35L by ICI Surfactants, of Wilmington, Delaware, USA; and RENEX^{™} 30, a polyoxyethylene ether alcohol also sold by ICI Surfactants.

The nonionic surfactant may also be a silicone polyether (SPE). The silicone polyether as an emulsifier may have a rake type structure wherein the polyoxyethylene or polyoxyethylene-polyoxypropylene copolymeric units are grafted onto the siloxane backbone, or the SPE can have an ABA block copolymeric structure wherein A represents the polyether portion and B the siloxane portion of an ABA structure. Suitable SPE's include DOWSIL^{™} OFX-5329 Fluid from Dow Silicones Corporation of Midland, Michigan, USA. Alternatively, the nonionic surfactant may be selected from polyoxyalkylene-substituted silicones, silicone alkanolamides, silicone esters and silicone glycosides. Such silicone-based surfactants may be used to form such aqueous emulsions and are known in the art, and have been described, for example, in U.S. Patent 4,122,029 to Gee et al., U.S. Patent 5,387,417 to Rentsch, and U.S. Patent 5,811,487 to Schulz et al.

Starting material (D-2) the nonionic surfactant may be delivered in a dilution, and the amount used may be sufficient to provide 0.1% to 10% of the surfactant, based on weight of starting material (F) the silicone - (meth)acrylate copolymer in the aqueous emulsion. Alternatively, the amount of nonionic surfactant may be at least 0.1%, alternatively at least 0.2%, alternatively at least 0.3%, alternatively at least 0.4%, alternatively at least 0.5%; while at the same time the amount of nonionic surfactant may be up to 5%, alternatively up to 4%, alternatively up to 3%, alternatively up to 2%, alternatively up to 1%, on the same basis. Alternatively, the amount of nonionic surfactant may be 0.2% to 4%, alternatively 0.3% to 3%, alternatively 0.4 to 2.5%, and alternatively 0.5% to 2%; on the same basis. Alternatively, starting materials (D-1) the cationic surfactant and (D-2) the nonionic surfactant may be present in combined amounts ≤ 10%, based on weight of starting material (F) the silicone - (meth)acrylate copolymer in the aqueous emulsion.

### Starting Material (E) Water

Starting material (E) is water. The water is not generally limited, for example, the water may be processed or unprocessed. Examples of processes that may be used for purifying the water include distilling, filtering, deionizing, and combinations of two or more thereof, such that the water may be deionized, distilled, and/or filtered. Alternatively, the water may be unprocessed (e.g. may be tap water, i.e., provided by a municipal water system or well water, used without further purification). The amount of water is sufficient to form an aqueous emulsion for emulsion polymerization in step 1) of the process described above. Additional water may be added after step 1). For example, the aqueous emulsion prepared as described above may be diluted with additional water to achieve a desired amount of starting materials before treating a textile with the emulsion formulation. The water may be added in an amount of 20% to 97%, alternatively 30% to 90%, and alternatively 40% to 80%, alternatively 50% to 97%, alternatively 50% to 90%, and alternatively 60% to 80%; based on combined weights of all starting materials in step 1). Alternatively, the water may be added in an amount of at least 20%, alternatively at least 30%, alternatively at least 40%, alternatively at least 50%, and alternatively at least 60%; while at the same time the amount of water may be up to 97%, alternatively up to 96%, alternatively up to 95%, and alternatively up to 80%, on the same basis.

Without wishing to be bound by theory, it is thought that starting materials (A), (B), and (C), and when present (J), copolymerize to form (F) the silicone - (meth)acrylate copolymer described below as starting material (F). It is further thought that starting materials (D) surfactant and (E) water do not participate in the copolymerization reaction, however, a copolymer including one or both of starting materials (D) and (E) is not excluded from the scope herein.

### Starting Material (F) Silicone - (Meth)acrylate Copolymer

The silicone - (meth)acrylate copolymer is prepared by emulsion copolymerization of starting materials comprising (A), (B), (C), and (I) described above. Alternatively, the silicone - (meth)acrylate copolymer is a reaction product of starting materials consisting essentially of starting materials (A), (B), (C), and (I) (and when present, (H) the chain transfer agent and/or (J) the additional monomer). Alternatively, the silicone - (meth)acrylate copolymer is a reaction product of starting materials consisting of starting materials (A), (B), (C), and (I) (and, when present, (H) and/or (J)). Without wishing to be bound by theory, it is thought that none of starting materials (D) and (E) copolymerize with starting materials (A), (B), and (C), but merely serve as a vehicle for copolymerization. However, nothing herein shall exclude the possibility that a portion of one or more of starting materials (D) and/or (E), or any other starting material added during the method, may participate in the copolymerization reaction of starting materials comprising (A), (B), (C), and (I).

### Starting Material (G) Water Dispersible Crosslinker

Starting material (G) is a water dispersible crosslinker (crosslinker) that may be added to the emulsion formulation for treating textiles. Suitable crosslinkers include blocked isocyanates and diols. The term "blocked isocyanates" encompasses mono-, di- and polyisocyanates in which an isocyanate group has been reacted with a blocking agent, which upon heating, release the isocyanate and the blocking agent. Suitable blocking agents are known in the art such as amines, amides, compounds having an active hydrogen atom, alcohols, or oximes. Blocked isocyanates are commercially available, such as ARKOPHOB^{™} DAN and ARKOPHOB^{™} SR from Archroma of Reinach, Switzerland; RUCO-GUARD^{™} WEB from Rudolf GmbH of Geretsreid, Bayern, Germany, and PHOBOL^{™} XAN from Huntsman Corporation of the Woodlands, Texas, USA. Diols include, for example, 1,2-propoanediol; 1,3-propanediol; 1,2-butanediol; 1,3-butanediol; 1,4-butanediol; 2,3-butanediol; 2-methyl-1,2-propanediol; 1,5-pentanediol; 2-methyl-2,3-butanediol; 1,6-hexanediol; 1,2-hexanediol; 2,5-hexanediol; 2-methyl-2,4-pentanediol; 2,3-dimethyl-2,3-butanediol; 2-ethylhexanediol; 1,2-octanediol; 1,2-decanediol; 2,2,4-trimethylpentanediol; 2-butyl-2-ethyl-1,3-propanediol; 2,2-diethyl-1,3-propanediol. Examples of suitable crosslinkers are known in the art and are disclosed, for example, in U.S. Patent Application 2017/0204558 to Knaup; U.S. Patent 9,777,105 to Hamajima et al., beginning at col. 11, line 54, which describe suitable crosslinkers. The exact amount of crosslinker (G) depends on various factors including the type and amount of (F) silicone - (meth)acrylate copolymer formed in step 1) and the textile to be treated, however, the weight of the crosslinker (G) may 0.25% to 3.75% on fabric weight, alternatively 0.25% to 1%, and alternatively 0.25% to 0.5%, on the same basis.

### Starting Material (H) Chain Transfer Agent

Starting material (H) is optional and may be added in an amount of 0 to 1%, based on combined weights of starting materials (A), (B), and (C) (and when present (J). Alternatively, (H) the chain transfer agent may be used in an amount of 0.5% to 0.6% on the same basis.

### Starting Material (I) Initiator

Starting material (I), an initiator, is also added in step 1) described above. Suitable initiators include azo compounds and peroxide compounds. For example, the azo compound may be an aliphatic azo compound such as 1-t-amylazo-1- cyanocyclohexane, azo-bisisobutyronitrile and 1-t-butylazo-cyanocyclohexane, 2,2'-azo- bis-(2-methyl)butyronitrile, 2,2'-azobis(2-methylpropionitrile), 2,2'-azobis(2-methylpropionamidine) dihydrochloride, 2,2'-azobis(cyanovaleric acid), or a combination of two or more thereof. Azo compounds are known in the art and are commercially available, e.g., under the tradename VAZO^{™} WSP from The Chemours Company of Wilmington, Delaware, USA. The peroxide compound may be a peroxide or a hydroperoxide, such as t-butylperoctoate, t- butyl perbenzoate, dicumyl peroxide, di-t-butyl peroxide, t-butyl hydroperoxide, cumene hydroperoxide, di-t-amyl peroxide and combinations of two or more thereof. Additionally, di-peroxide initiators may be used alone or in combination with other initiators. Such di-peroxide initiators include, but are not limited to, 1 ,4-bis-(t-butyl peroxycarbo)cyclohexane, 1 ,2-di(t-butyl peroxy)cyclohexane, and 2,5-di(t-butyl peroxy)-3-hexyne. Suitable peroxide compounds are known in the art and are commercially available from various sources, such as Sigma-Aldrich, Inc. Alternatively, the initiator may comprise isoascorbic acid.

An initiator may be used alone as starting material (I). Alternatively, starting material (I) may be a redox pair, which comprises an initiator as the oxidizing component and a reducing component. Alternatively, a redox pair including isoascorbic acid and a hydrophobic organic hydroperoxide such as t-amyl hydroperoxide or t-butyl hydroperoxide may be used as starting material (I). Examples of suitable initiators and/or redox pairs for starting material (I) are disclosed in U.S. Patent 6,576,051 to Bardman et al., beginning at col. 11, line 16. How the initiator is added depends on various factors including whether the initiator is water soluble and the type of initiator (e.g., whether a thermal initiator or a redox pair is used). Typically, when a thermal initiator is used, all the initiator is added at once at the beginning of step 1). Alternatively, when a redox pair is used, it may be metered in over time. The initiator (I) may be used in an amount sufficient to provide 0.01% to 3%, alternatively 0.1% to 1.5%, based on weight of the silicone - (meth)acrylate copolymer.

### Starting Material (J) Additional Monomer

Starting material (J) is an optional additional monomer that may be added in step 1). Starting material (J) is a non-crystallizable monomer that is distinct from starting materials (A), (B), and (C), described above. The additional monomer, when present, may be used in an amount of > 0 to 18.75 weight % based on weight of (F) the silicone - (meth)acrylate copolymer. Suitable monomers include (meth)acrylate monomers such as methyl methacrylate, t-amyl methacrylate, butyl (meth)acrylate such as t-butyl methacrylate, cyclohexyl (meth)acrylate, iso-decyl (meth)acrylate, isobornyl(meth)acrylate, 2-naphthyl acrylate, benzyl (meth)acrylate, 2-ethylhexyl(meth)acrylate, and combinations of two or more thereof. Alternatively the additional monomer may be styrene or vinyl chloride. Suitable monomers for starting material (J) are known in the art and are commercially available, *e.g*., from Polysciences, Inc. Alternatively, the additional monomer (J) may be selected from the group consisting of isobornyl methacrylate (IBMA), isobornyl acrylate (IBA), and a combination thereof. The additional monomer is optional and may be present in an amount of 0 to 18.75%, based on combined weights of starting materials (A), (B), and (C), and when present, (J). Alternatively, (J) the additional monomer may be present in an amount of at least 0.5%, alternatively at least 1%, and alternatively at least 2%; while at the same time the additional monomer may be present in an amount up to 18.75%, alternatively up to 15%, alternatively up to 10%, alternatively up to 8%, and alternatively up to 5%, on the same basis. Alternatively, the amount of (J) the additional monomer may be > 0 to 18.75%, alternatively 0.5% to 7%, alternatively 1% to 6%, and alternatively 2% to 5%, on the same basis.

### Starting Material (K) Inhibitor

Starting material (K) is an inhibitor that may optionally be added in step 1) of the process described above. When present, starting material (K), the inhibitor, may be used in an amount > 0 to < 0.01% based on weight of (F) the silicone - (meth)acrylate copolymer, alternatively > 0 to < 2,000 ppm, alternatively 1 ppm to 1818 ppm, alternatively 10 ppm to 500 ppm, on the same basis. Suitable inhibitors for starting material (K) are commercially available, and include, for example, nitrobenzene, butylated hydroxyl toluene, diphenyl picryl hydrazyl (DPPH), p-methoxyphenol, 2,4-di-t-butyl catechol, phenothiazine, N,N-diethylhydroxylamine, salts of N-nitroso phenylhydroxylamine, (2,2,6,6-tetramethylpiperidin-1-yl)oxidanyl (TEMPO), and 4-hydroxy-(2,2,6,6-tetramethylpiperidin-1-yl)oxidanyl (4-hydroxy TEMPO).

An additional starting material may optionally be added after step 1) to form the emulsion formulation suitable for treating the textile. The starting material may be selected from the group consisting of an additional surfactant as described above for starting material (D), (L) a wax, (M) a biocide, (N) additional water (as described above for starting material (E), (O) a flame retardant, (P) a wrinkle reducing agent, (Q) an antistatic agent, (R) a penetrating agent, or a combination of two or more of additional (D), (L), (M), (N), (O), (P), (Q), and (R).

### Starting Material (L) Wax

Starting material (L) is a wax, which may optionally be added to provide improved water repellency or softness to the textile to which the emulsion formulation will be applied. The amount of wax will vary depending on factors including the type of wax selected, the benefit desired, and the fabric to be treated with the emulsion formulation. However, the amount of wax may be 0 to 75%, alternatively 0 to 50%, alternatively 25% to 50% based on weight of (F) the silicone - (meth)acrylate copolymer. Alternatively, when used, the amount of wax may be > 0%, alternatively at least 10%, and alternatively at least 25%, while at the same time the amount of wax may be up to 75%, alternatively up to 50% on the same basis. Examples of suitable waxes include paraffin waxes (*e.g.,* n-paraffins, iso-paraffins, and/or cycloparaffins), silicone waxes such as silicone wax with long chain alkyl groups (*e.g.,* alkyl methyl silicone wax) and/or amino-silicone wax, and a combination of two or more thereof. Suitable waxes are disclosed, for example, in U.S. Patent Application 2017/0204558 to Knaup and U.S. Patent 10,844,151 to Probst, et al. Waxes may be delivered as water-based dispersions, for example Michelman wax 743 and others from Michelman of Cincinnati, Ohio, U.S.A. Other waxes are also commercially available, for example, from Sasol Wax of Hamburg, Germany, and silicone waxes, such as DOWSIL^{™} AMS-C30, are available from Dow Silicones Corporation of Midland, Michigan, U.S.A.

### Starting Material (M) Biocide

Starting material (M) is an optional biocide. The amount of biocide will vary depending on factors including the type of biocide selected and the benefit desired. However, when used, the amount of biocide may be > 0% to 5% based on the combined weights of all starting materials in the emulsion formulation. Starting material (M) is exemplified by (M-1) a fungicide, (M-2) an herbicide, (M-3) a pesticide, (M-4) an antimicrobial agent, or a combination thereof. Suitable biocides are disclosed, for example, in U.S. Patent 9,480,977.

### Starting Material (R) Penetrating Agent

Starting material (R) is a penetrating agent. Suitable penetrating agents are exemplified by glycol ethers, which are commercially available from The Dow Chemical Company and include DOWANOL^{™} DPM, TPM, PPh, EPh, Methyl CARBITOL^{™}, and Butyl CARBITOL^{™}.

When selecting starting materials to add to the aqueous emulsion described above in step 1) and the emulsion formulation formed in step 2) described above, there may be overlap between types of starting materials because certain starting materials described herein may have more than one function. The starting materials used in aqueous emulsion and/or the emulsion formulation, may be distinct from one another.

The emulsion formulation suitable for treating a textile comprises: (F) the silicone - (meth)acrylate copolymer, (D) the surfactant, (E) the water, and (G) the water dispersible crosslinker, as described above. The emulsion formulation may optionally further comprise an additional starting material selected from the group consisting of (L) the wax, (M) the biocide, (N) additional water, (O) the flame retardant, (P) the wrinkle reducing agent, (Q) the antistatic agent, (R) the penetrating agent, and a combination of two or more of starting materials (L), (M), (N), (O), (P), (Q) and (R). These additional starting materials and their amounts are as described above. Furthermore, the emulsion formulation described herein may be formulated with starting materials that are fluorocarbon-free. For example, the emulsion formulation may be free of any starting material that contains a fluorine atom covalently bonded to a carbon atom.

### Process for Treating Textiles

The emulsion formulation prepared as described above may be used for treating a textile. For example, a method for treating a textile comprises: I) coating the textile with the emulsion formulation described above, and II) heating the textile. Step I) may be performed by any convenient method, such as padding, dipping, or spraying the textile with the emulsion formulation. However, the method should be sufficient to deliver a sufficient amount of (F) the silicone - (meth)acrylate copolymer and (G) the water dispersible crosslinker sufficient to impart durable water resistance properties to the textile, according to the methods described below. The method may be sufficient to deliver on fabric weight of 0.25 weight % to 10 weight % of (F), the silicone - (meth)acrylate copolymer, and on fabric weight of 0.1 weight % to 3.75 weight %, alternatively 0.25% to 1%, of (G), the water dispersible crosslinker, both based on weight of the textile.

Step II) may be performed by any convenient method, such as placing the textile in an oven. Heating the textile may be performed to remove all or a portion of the water and/or cure the emulsion formulation. The exact temperature depends on various factors including the temperature sensitivity of the type of textile selected and the desired drying time. However, heating may be performed at a temperature > 100 °C to remove water. Alternatively, the temperature may be > 100 °C to 200 °C for a time sufficient to remove all or a portion of the water, de-block the blocked isocyanate crosslinker, and/or cure (F) the silicone - (meth)acrylate copolymer.

The textile to be treated is not specifically restricted. Suitable textiles include naturally derived textiles such as fabrics of cotton, silk, linen, and/or wool; textiles derived from synthetic sources such as rayon, acetate, polyesters, polyamides (such as Nylons), polyacrylonitriles, and polyolefins such as polyethylenes and/or polypropylenes, and combinations of two or more thereof (*e.g.,* blends such as polyester/cotton blend). The form of the textile is also not specifically restricted. The emulsion formulation described herein is suitable for use on textiles in any form, *e.g.,* woven fabrics, knitted fabrics, or nonwoven textiles.

### EXAMPLES

The following examples are provided to illustrate the invention to one skilled in the art and are not to be interpreted as limiting the invention set forth in the claims. Starting materials used herein were as follows. A textile to be treated was Nylon (style # 01194), which was purchased from Burlington and contained 98.61 % of Nylon and 1.39 % of Spandex. The weight was 6.84 Oz/Lin Yd and plain weave. Another textile to be treated was polyester or PES Woven (crepe), also from Burlington, style 4774 075, basis weight 220 g/m². The water dispersible crosslinker (H-1) was PhobolXan^{™} Extender (an oxime-blocked isocyanate emulsion) purchased from Huntsman and used as received. The crystallizable monomer (A-1) was stearyl acrylate, the crosslinkable (meth)acrylate monomer (C-1) was 2-hydroxyethyl methacrylate (HEMA), surfactant BRIJ^{™} L23-69, cationic surfactant ARQUAD^{™} 16-29 (hexadecyltrimethylammonium chloride), and 2,2'-azobis(2-methylpropionitrile) were commercially available and were purchased from commercial sources. Starting material (B-1) was 3-(1,5-bis(2-(1,1,1,5,5,5-hexamethyl-3-((trimethylsilyl)oxy)trisiloxan-3-yl)ethyl)-3-(((2-(1,1,1,5,5,5-hexamethyl-3-((trimethylsilyl)oxy)trisiloxan-3-yl)ethyl)dimethylsilyl)oxy)-1,1,5,5-tetramethyltrisiloxan-3-yl)propyl methacrylate (abbreviated Si16) prepared as described in U.S. Patent 6,420,504. Starting material (B2) was 3-(5-((1,1,1,3,5,5,5-heptamethyltrisiloxan-3-yl)oxy)-1,1,1,3,7,9,9,9-octamethyl-3,7-bis((trimethylsilyl)oxy)pentasiloxan-5-yl)propyl methacrylate (abbreviated Si10) prepared as described in WO2020/142388. MDDDM-ALMA was 3-(1,1,1,3,3,5,7,7,9,9,9-undecamethylpentasiloxan-5-yl)propyl methacrylate of formula 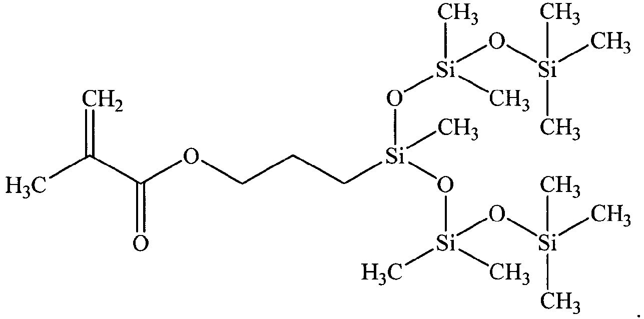 PDMS-ALMA was a mono-methacryloxypropyl-terminated, mono-trimethylsiloxy terminated, polydimethylsiloxane with a degree of polymerization n: of formula 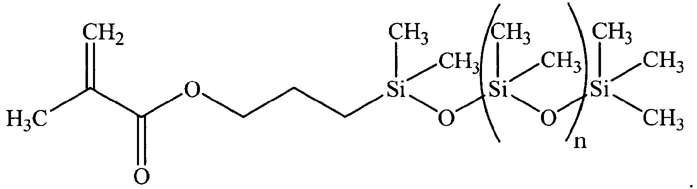 A Fisherbrand^{™} Model 705 sonic dismembrator was used for sonication. The microfluidizer was a Microfluidics Microfluidizer Model 110Y homogenizer. DT-resin-ALMA was a polymethylsilsesquioxane resin comprising difunctional and trifunctional siloxane units, wherein said resin further comprised methacryloxypropyl groups. MQ-resin-ALMA was a polymethylsilsesquioxane resin with methacryloxypropyl groups.

In this Reference Example, samples were prepared by (Method A, as follows. All monomers and surfactants and deionized water (200 g) were placed in a 400 ml jar. An optional 0.05 g of dodecanethiol was added to some samples. The jar was heated in a 40 °C water bath for 10 min to melt the stearyl acrylate. The contents of the jar were sonicated at an amplitude of 50 for two minutes using a sonicator to create a coarse emulsion. The coarse emulsion was then passed through a microfluidizer operating at 40 °C and 10-15k PSI. The resulting emulsion was then transferred to a 1000 mL 4 neck flask equipped with a reflux condenser, nitrogen inlet, overhead stirrer (IKA RW20) and thermocouple probe. This emulsion was stirred at 250 RPM using a Teflon blade and 0.7 g of 2,2'-Azobis(2-methyl-propionitrile) initiator (AIBN) was added and the mixture was heated to 60 °C. The reaction mixture was held at 60 °C for 75 min, 70 °C for 45 min and 80 °C for 60 min. The resulting material was then allowed to cool to 30 to 40 °C with slow stirring before pouring off.

In this Reference Example, samples were prepared by Method B, as follows. All monomers, surfactants and deionized water (200 g) were placed in a 400 ml jar. An optional 0.05 g of dodecanethiol was added to some samples. The jar was heated in a 40 °C water bath for 10 min to melt the stearyl acrylate. The resulting material was sonicated at an amplitude of 50 for two minutes using a sonicator to create a coarse emulsion. The coarse emulsion was then passed through a microfluidizer operating at 40 °C and 10-15k PSI. The resulting emulsion was then transferred to a 1000 mL 4 neck flask equipped with a reflux condenser, nitrogen inlet, overhead stirrer (IKA RW20) and thermocouple probe. This emulsion was stirred at 250 RPM using a Teflon blade and heated to 60 °C. After reaching temperature a redox initiator was fed into the jar at 0.25 mL/min (solution A+B, prepared as described below in separate feeds) and after an hour at 60 °C , the resulting material was then allowed to cool to 30 to 40 °C with slow stirring before pouring off.

Initiator solution A was prepared as follows: 0.702 g 70% t-butylhydroperoxide diluted in 45 mL of DI water to form a stock solution. The final solution was made by taking 5 g of this stock solution and mixing with 5 g of DI water.

Initiator solution B was prepared as follows: 0.96 g Isoascorbic acid in 45 mL of DI water to form a stock solution. The final solution was made by taking 5 g of this stock solution and mixing with 5 g of DI water.

In this reference example, molecular weight was determined by Gel Permeation Chromatography using the following method:

### Sample preparation:

The samples were prepared in THF eluent at concentration 10 mg/mL copolymer. The solution was shaken on a flat-bed shaker at ambient temperature for 2 hours. The solution was filtered through a 0.45 m PTFE syringe filter prior to injection.

### SEC conditions:

SEC was performed on a Waters 2695 LC pump and autosampler. The flow rate was set at 1 mL/min, and the injection volume was set at 100 uL. SEC separation was carried out on 2 Agilent Plgel Mixed-C columns held at 35 °C. The detector was a Waters 2410 differential refractive index detector held at 35 °C.

### Software and data process:

Agilent GPC software Cirrus version 3.3 was used for data collection and for data reduction. A total of 16 PS linear narrow molecular weight standards from Agilent having Mp values from 3750 to 0.58 kg/mol were used for molecular weight calibration. A 3^{rd} order polynomial was used for calibration curve fitting. Thus, all molecular weight averages, distributions and references to molecular weight provided in this report are PS equivalent values.

**Table 1 - Preparation of Copolymer Emulsions**

| Example Number and Method for Making (A or B) | Stearyl Acrylate [g (wt%)] | Si-Acrylate Macromonomer (wt%) | HEMA (wt %) | Surfactant, Brij-L23-69 (g) | Arquad 16-29 (g) | Dodecane thiol (g) | MW |
|---|---|---|---|---|---|---|---|
| Example 1-B | 48.87 g (97.75 %) | Si16 0.13 g (0.25 %) | 1 g (2 %) | 0.83 | 2.22 | 0.05 | 440693 |
| Example 2-B | 48.75 g (97.5 %) | Si16 0.25 g (0.5%) | 1 g (2 %) | 0.83 | 2.22 | 0.05 | 328143 |
| Example 3-B | 48.5 g (97 %) | Si16 0.5 g (1 %) | 1 g (2 %) | 0.83 | 2.22 | 0.05 | 379474 |
| Example 4-A | 44 g (93 %) | Si16 2.5 g (5 %) | 1 g (2 %) | 0.83 | 2.22 | 0.0 | 3589439* |
| Example 5-A | 44 g (93 %) | Si16 2.5 g (5 %) | 1 g (2 %) | 0.83 | 2.22 | 0.05 | 523563 |
| Example 6-A | 44 g (88 %) | Si16 5 g (10 %) | 1 g (2 %) | 0.83 | 2.22 | 0 | 197719 |
| Example 7-A | 46.5 g (93%) | Si16 7.5 g (15 %) | 1 g (2 %) | 0.83 | 2.22 | 0 | 386207 |
| Example 8-A | 41.5 g (83 %) | Si16 7.5 g (15 %) | 1 g (2 %) | 0.83 | 2.22 | 0.05 | 386156 |
| Example 9-A | 44 g (88 %) | Si10 5 g (10 %) | 1 g (2 %) | 0.83 | 2.22 | 0 | |
| Example 10-B | 47.5 g (95%) | Si16 1.5 g (3%) | 1 g (2%) | 1.66^{a} | 0 | 0.05 g | |
| Example 11-B^{b} | 40 g (80%) | Si16 1 g (2%) | 1 g (2%) | 0.83 | 2.22 | 0.05 | 329055 |
| Comparative Ex 1 | 0 | 0 | 0 | 0 | 0 | 0 | |
| Comparative Ex 2-A | 49 g (98 %) | 0 | 1 g (2 %) | 0.83 | 2.22 | 0.0 | |
| Comparative Ex 3-A | 49 g (98 %) | 0 | 1 g (2 %) | 0.83 | 2.22 | 0.05 | |
| Comparative Ex 4-A | 38 g (78 %) | Sil0 10 g (20 %) | 1 g (2 %) | 0.83 | 2.22 | 0 | |
| Comparative Ex 5-A | 44 g (88 %) | PDMS-ALMA 5 g (10 %) | 1 g (2 %) | 0.83 | 2.22 | 0 | |
| Comparative Ex 6-A | 44 g (88 %) | DT-resin-ALMA 5 g (10 %) | 1 g (2 %) | 0.83 | 2.22 | 0 | |
| Comparative Ex 7-B | 44 g (88 %) | MQ-resin-ALMA 5 g (10 %) | 1 g (2 %) | 0.83 | 2.22 | 0.05 | |
| Comparative Ex 8-A | 44 g (88%) | MDDDM-ALMA 5 g (10%) | 1 g (2%) | 0.83 | 2.22 | 0 | |

Unless otherwise indicated, the surfactant used was of Brij L23 (which was a dilution, with 69% surfactant/actives in the diluent). Superscript a denotes that Ecosurf EH-40 (75% actives) was used instead of Brij L23 (69% actives) in Example 10. Superscript b denotes that the sample included an additional monomer; added 8 g (16%) of isobornyl methacrylate.

Comparative Ex 1 was untreated fabric. In the table above, the letter after the example number, A or B, denotes the method used to make that example.

Coating formulations were prepared by combining 37 g of a copolymer emulsion (20% solids) prepared as described above, 6.16 g of PhobolXan^{™} Extender (30% solids) and 163 g of water in a plastic bottle and shaking by hand to mix.

The coating formulations were coated on the textile (Nylon fabric described above) using a Mathis HVF padder (roll speed of 2 meter/min at 60 psi). The target weight on Nylon (pickup 53.5%) is 2 % of silicone-acrylate copolymer and 0.5% of PhobolXan^{™} Extender. The formulation was added into the padder for coating and placed through a forced air oven at 160 °C for 3 min. Coated Nylon sheets were obtained.

The coated Nylon sheets were laundered using a 90 °F wash/cold rinse cycle and dried at 140 °F. This method was repeated 20 times. 37 g of Tide detergent (non-scent) for every 6 pounds of coated Nylon sheets was used.

The ISO-9865 (Bundesmann test) on a SDL Atlas M230 Bundesmann test apparatus was used to collect data after coating and before washing and after 1, 5, 10, and 20 washes. Appearance, amount of water that passed through the fabric, and water uptake of the coated Nylon sheets were recorded. The results are in Table 2 below.

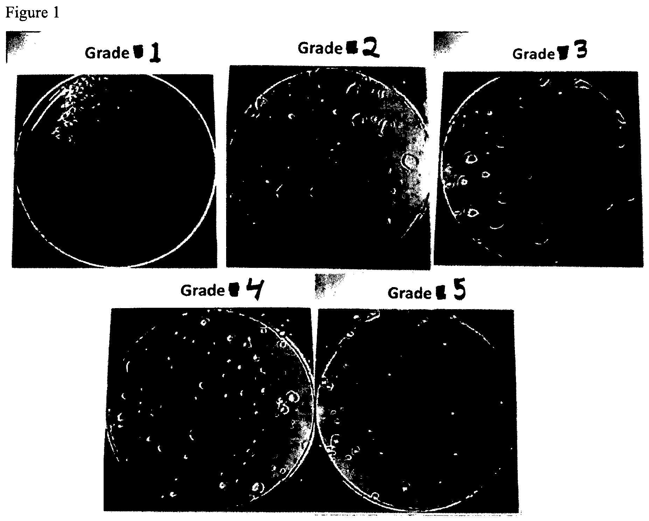

The appearance rating was subjective and based on the appearance of the water beading or lack thereof during the test. Figure 1 shows the Bundesmann appearance rating. Each sample was categorized according to the images in Figure 1 as follows: 5 top left, 4 top right, 3 middle left, 2 middle right, 1 bottom. The appearance was considered to pass if it was > 1 and was considered a fail if it was 1. Preferably, appearance was > 3. Additionally, the amount of water that passed through the fabric and was collected into a cup (water penetration) was considered a pass if it was less than 30 g. Finally, the amount of water that the fabric absorbed (water uptake) was recorded as a percent relative to the mass of the fabric. Ideally the fabric should uptake < 20 % of its mass. The lower the values for water uptake and water penetration the better. For durable water repellency, it was desired that the fabric still had appearance > 1, water uptake < 20%, and water penetration < 30 g after 5, 10, and 20 washes, according to the Bundesmann test described herein.

**Table 2A - Bundesmann Appearance Test Results on Nylon**

| Emulsion in coating formulation | Rating (target > 1 after 5, 10 and 20 washes) | | | |
|---|---|---|---|---|
| # of Washings | 0 | 5 | 10 | 20 |
| Example 1 | 4.5 | 4.5 | 4.5 | 4.5 |
| Example 2 | 4.5 | 4.5 | 4 | 4 |
| Example 3 | 3.5 | 4 | 4 | 4.5 |
| Example 4 | 1 | 3.5 | 3.5 | 3.5 |
| Example 5 | 4 | 4 | 4 | 3.5 |
| Example 6 | 1.5 | 4 | 5 | 5 |
| Example 7 | 1 | 3 | 3 | 3.5 |
| Example 8 | 4.5 | 5 | 4 | 4 |
| Example 9 | 1 | 3.5 | 4 | 4 |
| Example 10 | 5 | 5 | 5 | 5 |
| Example 11 | 5 | 5 | 5 | 4 |
| Comparative Ex 1 | | | | 1 |
| Comparative Ex 2 | 1 | 1 | 1 | 1 |
| Comparative Ex 3 | 1 | 1 | 1 | 1 |
| Comparative Ex 4 | 1 | 1 | 1 | 1 |
| Comparative Ex 5 | 1 | 1 | 2 | 3 |
| Comparative Ex 6 | 1 | 1 | 1 | 1 |
| Comparative Ex 7 | 1 | 1 | 1 | 1 |
| Comparative Ex 8 | 1 | 1 | 1 | 1 |

**Table 2B - Bundesmann Water Uptake Test Results on Nylon**

| Emulsion in coating formulation | Water Pickup (%) (Target < 20 % after 5, 10 and 20 washes) | | | |
|---|---|---|---|---|
| # of Washings | 0 | 5 | 10 | 20 |
| Example 1 | 10 | 16 | 15 | 16 |
| Example 2 | 10 | 15 | 16 | 19 |
| Example 3 | 12 | 16 | 14 | 17 |
| Example 4 | 31 | 15 | 18 | 17 |
| Example 5 | 8 | 11 | 14 | 17 |
| Example 6 | 21 | 14 | 12 | 14 |
| Example 7 | 20 | 15 | 18 | 18 |
| Example 8 | 8 | 13 | 16 | 16 |
| Example 9 | 26 | 19 | 16 | 16 |
| Example 10 | 5 | 10 | 10 | 12 |
| Example 11 | 11 | 14 | 14 | 20 |
| Comparative Ex 1 | | | | 124 |
| Comparative Ex 2 | 39 | 39 | 30 | 33 |
| Comparative Ex 3 | 54 | 53 | 57 | 47 |
| Comparative Ex 4 | 45 | 42 | 51 | 41 |
| Comparative Ex 5 | 29 | 29 | 26 | 15 |
| Comparative Ex 6 | 56 | 54 | 72 | 46 |
| Comparative Ex 7 | 50 | 60 | 56 | 57 |
| Comparative Ex 8 | 24 | 48 | 52 | 53 |

**Table 2C - Bundesmann Water Penetration Test Results on Nylon**

| Emulsion in coating formulation | Amount of Water Pass (g) (Target < 30 g after 5, 10, and 20 washes) | | | |
|---|---|---|---|---|
| # of Washings | 0 | 5 | 10 | 20 |
| Example 1 | 10 | 6 | 6 | 10 |
| Example 2 | 17 | 7 | 7 | 8 |
| Example 3 | 9 | 5 | 5 | 4 |
| Example 4 | 47 | 10 | 8 | 12 |
| Example 5 | 14 | 8 | 10 | 9 |
| Example 6 | 12 | 13 | 7 | 8 |
| Example 7 | 9 | 9 | 9 | 9 |
| Example 8 | 12 | 7 | 6 | 8 |
| Example 9 | 12 | 26 | 29 | 26 |
| Example 10 | 7 | 5 | 5 | 7 |
| Example 11 | 8 | 6 | 6 | 28 |
| Comparative Ex 1 | | | | 400 |
| Comparative Ex 2 | 349 | 217 | 400 | 106 |
| Comparative Ex 3 | 400 | 400 | 266 | 168 |
| Comparative Ex 4 | 349 | 193 | 111 | 153 |
| Comparative Ex 5 | 15 | 116 | 24 | 26 |
| Comparative Ex 6 | 400 | 400 | 400 | 400 |
| Comparative Ex 7 | 400 | 296 | 325 | 400 |
| Comparative Ex 8 | 28 | 161 | 115 | 159 |

It is desirable to produce a fabric with durable water-resistance, which after 5, 10, and 20 washes, has an appearance rating > 1, a water uptake < 20% of its mass, and a water pass through < 30 g, as measured by the Bundesmann test described above. Tables 2A, 2B and 2C show that a fabric with durable water-resistance (*i.e.* meeting all the appearance, water uptake and water pass through criteria described above after 5, 10, and 20 washes) was prepared using each of the samples prepared according to this invention. However, none of the comparative samples produced fabric meeting all 3 criteria at after each of 5, 10, and 20 washes under the conditions tested. Comparative examples 1-4, 6 and 7 failed all criteria. Comparative examples 5, 6, 7, and 8 each used different silicone - (meth)acrylate compounds, which are outside the scope of this invention to make copolymers, and each of these comparative examples failed one or more criteria. Surprisingly, Example 9 A and Comparative Example 4 showed that using an amount of (B) the silicone (meth)acrylate macromonomer (Si10) that was higher than 15% (based on combined weights of (A) the crystallizable monomer, (B) the silicone (meth)acrylate macromonomer, and (C) the crosslinkable monomer), performance of the coating suffered a detriment in Comparative Example 4, in that the water uptake after initial treatment as well as after 1, 5, 10, and 20 washes increased. Therefore, it was surprisingly found that a lower amount of silicone in the copolymer (in Example 9) produced a coating with better durable water repellency.

Wax additives can be added to improve properties of some textiles, such as the water repellency performance or make them feel softer. Emulsion formulations were prepared as described below in Table 3 according the procedure described above for Example 3 (Method B). Michelman wax 743 was used at ~30% solids, the copolymer emulsion from Example 3 described above (20 % solids) and PhobolXan^{™} Extender (~30% solids). Bundesmann testing was performed as described above, except that a polyester fabric was used instead of nylon. The results are in Tables 4A, 4B, and 4C below.

**Table 3 - Emulsion Formulations for Polyester Fabric**

| Coating Example | Copolymer Example 3 (g) | Wax (g) | PhobolXan (g) |
|---|---|---|---|
| Example 10 | 11.11 | 7.05 | 3.7 |
| Example 11 | 5.56 | 10.58 | 3.7 |
| Comparative Ex 9 | 0 | 14.11 | 3.7 |
| Example 12 | 22.22 | 0 | 3.7 |
| Comparative Ex 10 | 0 | 0 | 0 |

Coating, washing/drying, testing procedures and performance requirements are described above, except a different fabric was used. The fabric was polyester PES Woven (crepe) from Burlington, style 4774 075, basis weight 220 g/m².

**Table 4A - Bundesmann Appearance of Polyester Fabric (Target > 1 after 5, 10 and 20 washes)**

| # of Washings | 0 | 5 | 10 | 20 |
|---|---|---|---|---|
| Example 10 | 1 | 5 | 5 | 5 |
| Example 11 | 2 | 5 | 5 | 4.5 |
| Comparative Ex 9 | 1 | 1 | 1 | 1 |
| Example 12 | 1 | 1.5 | 1.5 | 1.5 |
| Comparative Ex 10 | 1 | | | 1 |

**Table 4B - Bundesmann Water Absorption on Polyester Fabric (Target < 20 % after 5, 10 and 20 washes)**

| # of Washings | 0 | 5 | 10 | 20 |
|---|---|---|---|---|
| Example 10 | 41 | 8 | 7 | 7 |
| Example 11 | 27 | 4 | 5 | 9 |
| Comparative Ex 9 | 61 | 70 | 84 | 118 |
| Example 12 | 40 | 19 | 17 | 17 |
| Comparative Ex 10 | 138 | | | 138 |

**Table 4C - Bundesmann Water Penetration on Polyester Fabric (Target < 30 g after 5, 10 and 20 washes)**

| # of Washings | 0 | 5 | 10 | 20 |
|---|---|---|---|---|
| Example 10 | 33 | 20 | 18 | 21 |
| Example 11 | 23 | 25 | 22 | 19 |
| Comparative Ex 9 | 208 | 400 | 400 | 400 |
| Example 12 | 40 | 18 | 21 | 17 |
| Comparative Ex 10 | 400 | | | 400 |

The water repellency performance on the porous polyester fabric above was improved with the addition of a wax emulsion at 1:1 and 3:1 ratio of wax to copolymer emulsion relative to using the wax emulsion (without copolymer emulsion) or copolymer emulsion (without wax emulsion). Examples 10, 11 and 12 met all the performance criteria outlined above under the conditions tested. Comparative example 9 (wax emulsion with no copolymer emulsion) performed similarly to an uncoated polyester fabric (in comparative Example 10), and failed all three criteria, under the conditions tested.

Additional copolymer emulsion samples were made according to Method B in the Reference Example described above, but using the starting materials and amounts shown below in Table 5. In Table 5, 'HEMA' means 2-hydroxyethyl methacrylate, 'GMA' means glycidyl (meth)acrylate, 'PEGMA' means poly(ethylene glycol) (meth)acrylate, 'MAA' means methacrylic acid, 'Nacrylamide' means *N*-hydroxymethylacrylamide, 'Amino' means 2-(dimethylamino)ethyl methacrylate, and '(C-2)' means a ureido (meth)acrylate monomer of formula (C-2) described above. These examples show that emulsions of copolymers with different crosslinkable groups can be prepared as described herein.

**Table 5 - Additional Copolymer Emulsion Samples**

| Example Number and Method B | Stearyl Acrylate [ g (wt%)] | Si-Acrylate Macromonomer (wt%) | X-linkable group 1 (wt %) | X-linkable group 1 (wt %) | Surfactant, ECOSURF EH-40 (g) | Dodecane thiol (g) |
|---|---|---|---|---|---|---|
| Example 13 | 47.5 g (93%) | Si16 1.5 g (3 %) | HEMA 2 g (4%) | - | 1.67 | 0.05 |
| Example 14 | 48.5 g (95%) | Si16 1.5 g (3 %) | HEMA 1 g (2%) | GMA 1 g (2%) | 1.67 | 0.05 |
| Example 15 | 48.5 g (95%) | Si16 1.5 g (3 %) | (C-2) 1 g (2%) | - | 1.67 | 0.05 |
| Example 16 | 47.5 g (93%) | Si16 1.5 g (3 %) | HEMA 1 g (2%) | 1458 1 g (2%) | 1.67 | 0.05 |
| Example 17 | 48.5 g (95%) | Si16 1.5 g (3 %) | GMA 1 g (2%) | - | 1.67 | 0.05 |
| Example 18 | 47.5 g (93%) | Si16 1.5 g (3 %) | GMA 1 g (2%) | 1458 1 g (2%) | 1.67 | *0.05* |
| Example 19 | 48.5 g (95%) | Si16 1.5 g (3 %) | Nacrylamide 1 g (2%) | - | 1.67 | 0.05 |
| Example 20 | 48.5 g (95%) | Si16 1.5 g (3 %) | Amino 1 g (2%) | - | 1.67 | 0.05 |
| Example 21 | 48.5 g (95%) | Si16 1.5 g (3 %) | PEGMA 1 g (2%) | - | 1.67 | 0.05 |
| Example 22 | 48.5 g (95%) | Si16 1.5 g (3 %) | MAA 1 g (2%) | | 1.67 | 0.05 |
| Example 23 | 48.5 g (95%) | Si16 1.5 g (3 %) | HEMA 1 g (2%) | | 1.67 | 0.05 |

The samples from Table 5 were combined with PhobolXan^{™} Extender (30% solids) and water in a plastic bottle and shaking by hand to mix. These samples were coated on PES (as described above) and evaluated by the Bundesmann Appearance, Water Uptake, and Water Penetration tests described above. The results are shown below in Tables 7A, 7B, and 7C.

**Table 7A - Bundesmann Appearance Test Results on PES**

| Emulsion in Coating Formulation | Rating (target > 1 after 10 and 20 washes) | | | |
|---|---|---|---|---|
| # of Washings | 0 | 1 | 10 | 20 |
| Example 13 | 5 | 5 | 5 | 4.5 |
| Example 14 | 5 | 5 | 5 | 4.5 |
| Example 15 | 5 | 5 | 5 | 4.5 |
| Example 16 | 5 | 5 | 5 | 4.5 |
| Example 17 | 5 | 5 | 5 | 4.5 |
| Example 18 | 5 | 5 | 4.5 | 4.5 |
| Example 19 | 5 | 5 | 4.5 | 4.5 |
| Example 20 | 5 | 5 | 4.5 | 4.5 |
| Example 21 | 5 | 5 | 5 | 4.5 |
| Example 22 | 5 | 5 | 5 | 5 |

**Table 7B - Bundesmann Water Uptake Test Results on PES**

| Emulsion in Coating Formulation | Water Pickup (%) (Target < 20 % after 10 and 20 washes) | | | |
|---|---|---|---|---|
| # of Washings | 0 | 1 | 10 | 20 |
| Example 13 | 4 | 8 | 8 | 11 |
| Example 14 | 3 | 10 | 7 | 10 |
| Example 15 | 4 | 9 | 7 | 10 |
| Example 16 | 4 | 8 | 11 | 12 |
| Example 17 | 6 | 11 | 9 | 11 |
| Example 18 | 4 | 11 | 13 | 14 |
| Example 19 | 8 | 13 | 13 | 14 |
| Example 20 | 8 | 13 | 13 | 15 |
| Example 21 | 9 | 13 | 11 | 10 |
| Example 22 | 4 | 4 | 9 | 10 |

**Table 7C - Bundesmann Water Penetration Test Results on PES**

| Emulsion in Coating Formulation | Amount of Water Pass (g) (Target < 30 g after 10 and 20 washes) | | | |
|---|---|---|---|---|
| # of Washings | 0 | 1 | 10 | 20 |
| Example 13 | 24 | 21 | 20 | 17 |
| Example 14 | 24 | 21 | 19 | 16 |
| Example 15 | 21 | 17 | 21 | 16 |
| Example 16 | 24 | 17 | 19 | 16 |
| Example 17 | 26 | 16 | 21 | 15 |
| Example 18 | 22 | 17 | 15 | 14 |
| Example 19 | 22 | 20 | 22 | 15 |
| Example 20 | 18 | 16 | 20 | 17 |
| Example 21 | 21 | 18 | 20 | 17 |
| Example 22 | 22 | 21 | 17 | 20 |

### PROBLEM TO BE ADDRESSED

There is a need industry need for non-fluorocarbon-based textile treatments that have durable water repellency. Furthermore, there is an industry need to for fluorocarbon-free solutions with high durability as measured by the Bundesmann test, described above.

### INDUSTRIAL APPLICABILITY

The above examples show that the process described herein can produce a fabric having durable water repellency as measured by the Bundesmann test described herein. More specifically, the fabric can have Bundesmann appearance rating > 1 after 5, 10, and 20 washes, water pickup ≤ 20% after 5, 10, and 20 washes, and water penetration ≤ 30 g after 5, 10, and 20 washes.

### DEFINITIONS AND USAGE OF TERMS

All amounts, ratios, and percentages herein are by weight, unless otherwise indicated. The articles, "a", "an", and "the" each refer to one or more, unless otherwise indicated by the context of the specification. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples. The abbreviations used herein have the definitions in Table 5.

**Table 5 - Abbreviations**

| Abbreviation | Definition |
|---|---|
| °C | degrees Celsius |
| °F | degrees Fahrenheit |
| g | grams |
| GPC | Gel permeation chromatography, used to measure molecular weight of copolymers herein according to the method described in the Reference Example, above |
| HEMA | hydroxyethylmethacrylate |
| m | meters |
| (meth)acrylate | class of compound including an acrylate, a methacrylate, or both. |
| min | minutes |
| mL | milliliters |
| Mp | Peak average molecular weight |
| Oz/Lin Yd | Ounce per linear yard |
| ppm | Parts per million |
| psi | pounds per square inch |
| PTFE | polytetrafluoroethylene |
| RPM | revolutions per minute |
| RT | room temperature of 25 °C ± 2 °C |
| uL | microliter |
| um | micrometer |

The invention has been described in an illustrative manner, and it is to be understood that the terminology which has been used is intended to be in the nature of words of description rather than of limitation. With respect to any Markush groups relied upon herein for describing particular features or aspects, different, special, and/or unexpected results may be obtained from each member of the respective Markush group independent from all other Markush members. Each member of a Markush group may be relied upon individually and or in combination and provides adequate support for specific embodiments within the scope of the appended claims.

Furthermore, any ranges and subranges relied upon in describing the present invention independently and collectively fall within the scope of the appended claims and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and any other subrange subsumed within the range. As just one example, a range of "16 to 24" may be further delineated into a lower third, *i.e.,* 16 to 18, a middle third, *i.e*., 19 to 21, and an upper third, *i.e*., from 22 to 24, and alternatively, the range "16 to 24" includes the subrange "18 to 22", each which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," and "no more than,", it is to be understood that such language includes subranges and/or an upper or lower limit.

## Claims

1. A silicone - (meth)acrylate copolymer comprising unit formula: 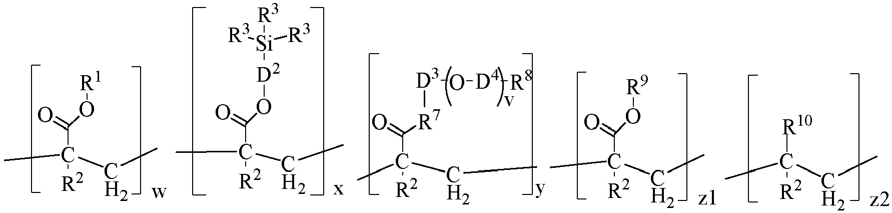 where each R¹ is an independently selected alkyl group of 16 to 24 carbon atoms; each R² is independently selected from the group consisting of H and methyl; each D² is a divalent hydrocarbon group of 2 to 12 carbon atoms; each R³ is a group of formula OSi(R⁴)₃; where each R⁴ is independently selected from the group consisting of R and DSi(R⁵)₃, where each R is an independently selected monovalent hydrocarbon group of 1 to 12 carbon atoms, and each D is independently selected from the group consisting of an oxygen atom, a (poly)alkylene oxide group of 1 to 12 units, and a divalent hydrocarbon group of 2 to 4 carbon atoms; each R⁵ is independently selected from the group consisting of R and DSi(R⁶)₃; where each R⁶ is independently selected from the group consisting of R and DSiR₃; with the proviso that R⁴, R⁵, and R⁶ are selected such that the silicone - (meth)acrylate macromonomer unit with subscript x has 10 to 16 silicon atoms; each R⁷ is independently selected from the group consisting of an oxygen atom and NH; D³ is a divalent hydrocarbon group of 1 to 12 carbon atoms; D⁴ is an alkylene group of 2 to 4 carbon atoms or a divalent alkylarylene group; subscript v represents number of units of formula (OD⁴), and subscript v has a value of 0 to 12; each R⁸ is a crosslinkable group; each R⁹ is a monovalent hydrocarbon group of 1 to 14 carbon atoms; each R¹⁰ is independently selected from the group consisting of a halogen, an acetate group, or a monovalent hydrocarbon group of 1 to 14 carbon atoms; subscripts w, x, y, z1, and z2 represent relative weights of each unit in the copolymer, subscript x has a value of 0.25 to 15; subscript w has a value of 80 to 98.75; subscript y has a value of 1 to 5; subscript z1 has a value of 0 to 18.75; and subscript z2 has a value of 0 to 18.75, and a quantity (w + x + y + z1 + z2) = 100; and with the proviso that the copolymer further comprises a terminal moiety.

2. A process for forming an aqueous emulsion of the copolymer of claim 1, the process comprising:
1) copolymerizing starting materials comprising
80 weight % to 98.75 weight % of (A) a crystallizable monomer of formula 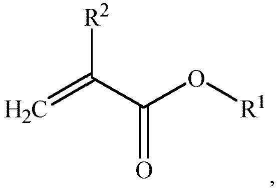 where R¹ and R² are as described above; 0.25 weight % to 15 weight % of (B) a silicone - (meth)acrylate macromonomer of formula 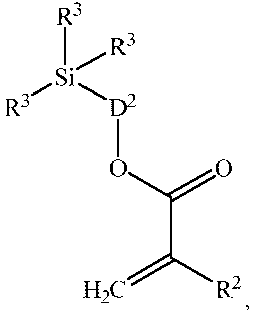 where R², D², and R³ are as described above; 1 weight % to 5 weight % of (C) a crosslinkable (meth)acrylate monomers of formula 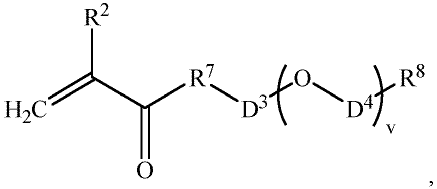 where R⁷, D³, D⁴, subscript v, and R⁸ are as described above;
(D) a surfactant;
(E) water; and
(I) an initiator;
thereby forming an aqueous emulsion comprising (F) a silicone - (meth)acrylate copolymer, (D) the surfactant, and (E) the water.

3. The process of claim 2, where starting material (A) is selected from the group consisting of stearyl acrylate, stearyl methacrylate, behenyl methacrylate and behenyl acrylate.

4. The process of claim 2 or claim 3, where starting material (B) is selected from the group consisting of:
3-(5-((1,1,1,3,5,5,5-heptamethyltrisiloxan-3-yl)oxy)-1,1,1,3,7,9,9,9-octamethyl-3,7-bis((trimethylsilyl)oxy)pentasiloxan-5-yl)propyl methacrylate;
3-(1,5-bis(2-(1,1,1,5,5,5-hexamethyl-3-((trimethylsilyl)oxy)trisiloxan-3-yl)ethyl)-3-(((2-(1,1,1,5,5,5-hexamethyl-3-((trimethylsilyl)oxy)trisiloxan-3-yl)ethyl)dimethylsilyl)oxy)- 1,1,5,5-tetramethyltrisiloxan-3-yl)propyl methacrylate; and a combination thereof.

5. The process of any one of claims 2 to 4, where in starting material (C), where each R⁸ is independently selected from the group consisting of hydroxy, amino, epoxy, ureido, and acetoxy.

6. The process of any one of claims 3 to 4, where starting material (C) is 2-hydroxyethylmethacrylate.

7. The process of any one of claims 3 to 6, where starting material (D) is selected from the group consisting of a cationic surfactant, a nonionic surfactant, and a combination thereof.

8. The process of claim 7, where the cationic surfactant comprises a quaternary ammonium compound; or the nonionic surfactant comprises a polyethylene glycol, an alcohol ethoxylate, or a combination thereof.

9. The process of any one of claims 2 to 8, further comprising adding an additional starting material selected from the group consisting of (H) a chain transfer agent, (J) an additional monomer, (K) an inhibitor, or a combination of two or more of (H), (J), and (K) in step 1).

10. The process of claim 9, where (H) the chain transfer agent is present, and the chain transfer agent comprises dodecane thiol.

11. A process for preparing an emulsion formulation suitable for treating a textile, the process comprising:
1) forming an aqueous emulsion of the copolymer of claim 1,
2) combining the aqueous emulsion and starting material (G) a water dispersible crosslinker comprising a blocked isocyanate.

12. The process of claim 11, further comprising an additional starting material selected from the group consisting of (L) a wax, (M) a biocide, (N) additional water, (O) a flame retardant, (P) a wrinkle reducing agent, (Q) an antistatic agent, (R) a penetrating agent or a combination of two or more of (L), (M), (N), (O), (P), (Q), and (R).

13. An emulsion formulation suitable for treating a textile, where the emulsion formulation comprises: the silicone - (meth)acrylate copolymer of claim 1, a surfactant, water, a water dispersible crosslinker, optionally (L) a wax, optionally (M) a biocide, optionally (N) additional water, optionally (O) a flame retardant, optionally (P) a wrinkle reducing agent, optionally (Q) an antistatic agent, and optionally (R) a penetrating agent.

14. A process for treating a textile, the process comprising:
I) coating the textile with the emulsion formulation of claim 13; and
II) heating the textile.

15. A process for preparing an emulsion formulation suitable for treating a textile, the process comprising:
1) copolymerizing starting materials comprising
80 weight % to 98.75 weight % of (A) a crystallizable monomer of formula 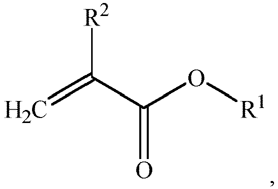 where each R¹ is an independently selected alkyl group of 16 to 24 carbon atoms; and each R² is independently selected from the group consisting of H and methyl;
0.25 weight % to 15 weight % of (B) a silicone - (meth)acrylate macromonomer of formula 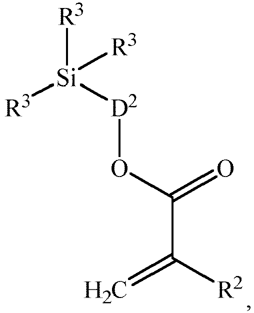 where each D² is a divalent hydrocarbon group of 2 to 12 carbon atoms; each R³ is a group of formula OSi(R⁴)₃; where each R⁴ is independently selected from the group consisting of R and DSi(R⁵)₃, where each R is an independently selected monovalent hydrocarbon group of 1 to 12 carbon atoms, and each D is independently selected from the group consisting of an oxygen atom, a (poly)alkylene oxide group of 1 to 12 units, and a divalent hydrocarbon group of 2 to 4 carbon atoms; each R⁵ is independently selected from the group consisting of R and DSi(R⁶)₃; where each R⁶ is independently selected from the group consisting of R and DSiR₃; with the proviso that R⁴, R⁵, and R⁶ are selected such that the silicone - (meth)acrylate macromonomer has 10 to 16 silicon atoms; each R⁷ is independently selected from the group consisting of an oxygen atom and NH; and R² is as described above;
1 weight % to 5 weight % of (C-3) (meth)acrylic acid;
(D) a surfactant;
(E) water; and
(I) an initiator;
thereby forming an aqueous emulsion comprising (F) a silicone - (meth)acrylate copolymer, (D) the surfactant, and (E) the water; and
2) combining the aqueous emulsion and starting material (G) a water dispersible crosslinker comprising a blocked isocyanate.

## Patentansprüche

1. Silikon-(Meth)acrylat-Copolymer, umfassend die Einheitsformel: 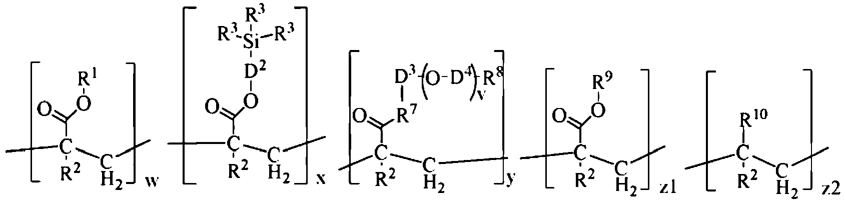 wobei jedes R¹ eine unabhängig ausgewählte Alkylgruppe aus 16 bis 24 Kohlenstoffatomen ist; jedes R² unabhängig aus der Gruppe ausgewählt ist, bestehend aus H und Methyl; jedes D² eine zweiwertige Kohlenwasserstoffgruppe aus 2 bis 12 Kohlenstoffatomen ist; jedes R³ eine Gruppe von Formel OSi(R⁴)₃ ist; wobei jedes R⁴ unabhängig aus der Gruppe ausgewählt ist, bestehend aus R und DSi(R⁵)₃, wobei jedes R eine unabhängig ausgewählte einwertige Kohlenwasserstoffgruppe aus 1 bis 12 Kohlenstoffatomen ist, und jedes D unabhängig aus der Gruppe ausgewählt ist, bestehend aus einem Sauerstoffatom, einer (Poly)alkylenoxidgruppe aus 1 bis 12 Einheiten und einer zweiwertigen Kohlenwasserstoffgruppe aus 2 bis 4 Kohlenstoffatomen; jedes R⁵ unabhängig aus der Gruppe ausgewählt ist, bestehend aus R und DSi(R⁶)₃; wobei jedes R⁶ unabhängig aus der Gruppe ausgewählt ist, bestehend aus R und DSiR₃; mit der Maßgabe, dass R⁴, R⁵ und R⁶ derart ausgewählt sind, dass die Silikon-(Meth)acrylat-Makromonomereinheit mit Index x 10 bis 16 Siliziumatome aufweist; jedes R⁷ unabhängig aus der Gruppe ausgewählt ist, bestehend aus einem Sauerstoffatom und NH; D³ eine zweiwertige Kohlenwasserstoffgruppe aus 1 bis 12 Kohlenstoffatomen ist; D⁴ eine Alkylengruppe aus 2 bis 4 Kohlenstoffatomen oder eine zweiwertige Alkylarylengruppe ist; der Index v die Anzahl von Einheiten von Formel (OD⁴) darstellt, und der Index v einen Wert von 0 bis 12 aufweist; jedes R⁸ eine vernetzbare Gruppe ist; jedes R⁹ eine einwertige Kohlenwasserstoffgruppe aus 1 bis 14 Kohlenstoffatomen ist; jedes R¹⁰ unabhängig aus der Gruppe ausgewählt ist, bestehend aus einem Halogen, einer Acetatgruppe oder einer einwertigen Kohlenwasserstoffgruppe aus 1 bis 14 Kohlenstoffatomen; die Indizes w, x, y, z1 und z2 relative Gewichtungen jeder Einheit in dem Copolymer darstellen, Index x einen Wert von 0,25 bis 15 aufweist; Index w einen Wert von 80 bis 98,75 aufweist; Index y einen Wert von 1 bis 5 aufweist; Index z1 einen Wert von 0 bis 18,75 aufweist; und Index z2 einen Wert von 0 bis 18,75 aufweist, und eine Menge (w + x + y + z1 + z2) = 100; und mit der Maßgabe, dass das Copolymer ferner einen endständigen Rest umfasst.

2. Verfahren zum Ausbilden einer wässrigen Emulsion des Copolymers nach Anspruch 1, das Verfahren umfassend:
1) Copolymerisieren von Ausgangsmaterialien, umfassend
zu 80 Gew.-% bis 98,75 Gew.-% (A) ein kristallisierbares Monomer der Formel 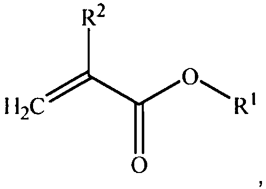 wobei R¹ und R² wie vorstehend beschrieben sind;
zu 0,25 Gew.-% bis 15 Gew.-% (B) ein Silikon-(Meth)acrylat-Makromonomer der Formel 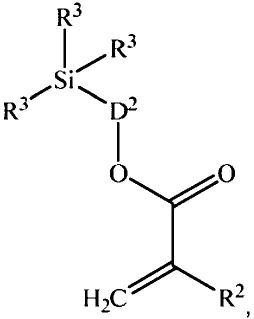 wobei R², D² und R³ wie vorstehend beschrieben sind;
zu 1 Gew.-% bis 5 Gew.-% (C) vernetzbare (Meth)acrylat-Monomere der Formel 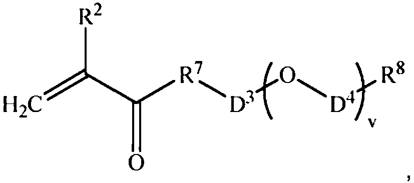 wobei R⁷, D³, D⁴, Index v und R⁸ wie vorstehend beschrieben sind;
(D) ein Tensid;
(E) Wasser; und
(I) einen Initiator;
wodurch eine wässrige Emulsion ausgebildet wird, umfassend (F) ein Silikon-(Meth)acrylat-Copolymer, (D) das Tensid und (E) das Wasser.

3. Verfahren nach Anspruch 2, wobei das Ausgangsmaterial (A) aus der Gruppe ausgewählt ist, bestehend aus Stearylacrylat, Stearylmethacrylat, Behenylmethacrylat, Behenylacrylat.

4. Verfahren nach Anspruch 2 oder 3, wobei das Ausgangsmaterial (B) aus der Gruppe ausgewählt ist, bestehend aus:
3-(5-((1,1,1,3,5,5,5-Heptamethyltrisiloxan-3-yl)oxy)-1,1,1,3,7,9,9,9-octamethyl-3,7-bis((trimethylsilyl)oxy)pentasiloxan-5-yl)propylmethacrylat;
3-(1,5-bis(2-(1,1,1,5,5,5-Hexamethyl-3-((trimethylsilyl)oxy)trisiloxan-3-yl)ethyl)-3-(((2-(1,1,1,5,5,5-hexamethyl-3-((trimethylsilyl)oxy)trisiloxan-3-yl)ethyl)dimethylsilyl)oxy)-1,1,5,5-tetramethyltrisiloxan-3-yl)propylmethacrylat; und einer Kombination davon.

5. Verfahren nach einem der Ansprüche 2 bis 4, wobei in dem Ausgangsmaterial (C), wobei jedes R⁸ unabhängig aus der Gruppe ausgewählt ist, bestehend aus Hydroxy, Amino, Epoxy, Ureido und Acetoxy.

6. Verfahren nach einem der Ansprüche 3 bis 4, wobei das Ausgangsmaterial (C) 2-Hydroxyethylmethacrylat ist.

7. Verfahren nach einem der Ansprüche 3 bis 6, wobei das Ausgangsmaterial (D) aus der Gruppe ausgewählt ist, bestehend aus einem kationischen Tensid, einem nichtionischen Tensid und einer Kombination davon.

8. Verfahren nach Anspruch 7, wobei das kationische Tensid eine Verbindung aus quartärem Ammonium umfasst; oder das nichtionische Tensid ein Polyethylenglykol, ein Alkoholethoxylat oder eine Kombination davon umfasst.

9. Verfahren nach einem der Ansprüche 2 bis 8, ferner umfassend ein Hinzufügen eines zusätzlichen Ausgangsmaterials, das aus der Gruppe ausgewählt ist, bestehend aus (H) einem Übertragungsregler, (J) einem zusätzlichen Monomer, (K) einem Inhibitor oder einer Kombination von zwei oder mehr von (H), (J) und (K) in Schritt 1).

10. Verfahren nach Anspruch 9, wobei (H) der Übertragungsregler vorhanden ist und der Übertragungsregler Dodecanthiol umfasst.

11. Verfahren zum Herstellen einer Emulsionsformulierung, die zum Behandeln eines Textils geeignet ist, das Verfahren umfassend:
1) Ausbilden einer wässrigen Emulsion des Copolymers nach Anspruch 1,
2) Kombinieren der wässrigen Emulsion und des Ausgangsmaterials (G), eines wasserdispergierbaren Vernetzers, umfassend ein blockiertes Isocyanat.

12. Verfahren nach Anspruch 11, ferner umfassend ein zusätzliches Ausgangsmaterial, das aus der Gruppe ausgewählt ist, bestehend aus (L) einem Wachs, (M) einem Biozid, (N) zusätzlichem Wasser, (O) einem Flammschutzmittel, (P) einem Faltenreduzierungsmittel, (Q) einem Antistatikmittel, (R) einem Penetrationsmittel oder einer Kombination aus zwei oder mehr von (L), (M), (N), (O), (P), (Q), und (R).

13. Emulsionsformulierung, die zum Behandeln eines Textils geeignet ist, wobei die Emulsionsformulierung umfasst: das Silikon-(Meth)acrylat-Copolymer von Anspruch 1, ein Tensid, Wasser, einen wasserdispergierbaren Vernetzer, gegebenenfalls (L) ein Wachs, gegebenenfalls (M) ein Biozid, gegebenenfalls (N) zusätzliches Wasser, gegebenenfalls (O) ein Flammschutzmittel, gegebenenfalls (P) ein Faltenreduzierungsmittel, gegebenenfalls (Q) ein Antistatikmittel, und gegebenenfalls (R) ein Penetrationsmittel.

14. Verfahren zum Behandeln eines Textils, das Verfahren umfassend:
I) Beschichten des Textils mit der Emulsionsformulierung nach Anspruch 13; und
II) Erwärmen des Textils.

15. Verfahren zum Herstellen einer Emulsionsformulierung, die zum Behandeln eines Textils geeignet ist, das Verfahren umfassend:
1) Copolymerisieren von Ausgangsmaterialien, umfassend
zu 80 Gew.-% bis 98,75 Gew.-% (A) ein kristallisierbares Monomer der Formel 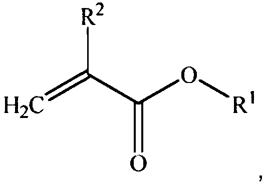 wobei jedes R¹ eine unabhängig ausgewählte Alkylgruppe aus 16 bis 24 Kohlenstoffatomen ist; und jedes R² unabhängig aus der Gruppe ausgewählt ist, bestehend aus H und Methyl;
zu 0,25 Gew.-% bis 15 Gew.-% (B) ein Silikon-(Meth)acrylat-Makromonomer der Formel 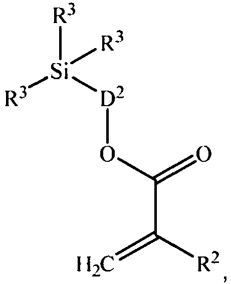 wobei jedes D² eine zweiwertige Kohlenwasserstoffgruppe aus 2 bis 12 Kohlenstoffatomen ist; jedes R³ eine Gruppe von Formel OSi(R⁴)₃ ist; wobei jedes R⁴ unabhängig aus der Gruppe ausgewählt ist, bestehend aus R und DSi(R⁵)₃, wobei jedes R eine unabhängig ausgewählte einwertige Kohlenwasserstoffgruppe aus 1 bis 12 Kohlenstoffatomen ist, und jedes D unabhängig aus der Gruppe ausgewählt ist, bestehend aus einem Sauerstoffatom, einer (Poly)alkylenoxidgruppe aus 1 bis 12 Einheiten und einer zweiwertigen Kohlenwasserstoffgruppe aus 2 bis 4 Kohlenstoffatomen; jedes R⁵ unabhängig aus der Gruppe ausgewählt ist, bestehend aus R und DSi(R⁶)₃; wobei jedes R⁶ unabhängig aus der Gruppe ausgewählt ist, bestehend aus R und DSiR₃; mit der Maßgabe, dass R⁴, R⁵ und R⁶ derart ausgewählt sind, dass das Silikon-(Meth)acrylat-Makromonomer 10 bis 16 Siliziumatome aufweist; jedes R⁷ unabhängig aus der Gruppe ausgewählt ist, bestehend aus einem Sauerstoffatom und NH; und R² wie vorstehend beschrieben ist;
zu 1 Gew.-% bis 5 Gew.-% (C-3) (Meth)acrylsäure;
(D) ein Tensid;
(E) Wasser; und
(I) einen Initiator;
wodurch eine wässrige Emulsion ausgebildet wird, umfassend (F) ein Silikon-(Meth)acrylat-Copolymer, (D) das Tensid und (E) das Wasser; und
2) Kombinieren der wässrigen Emulsion und des Ausgangsmaterials (G), eines wasserdispergierbaren Vernetzers, der ein blockiertes Isocyanat umfasst.

## Revendications

1. Copolymère de silicone-(méth)acrylate comprenant la formule unitaire : 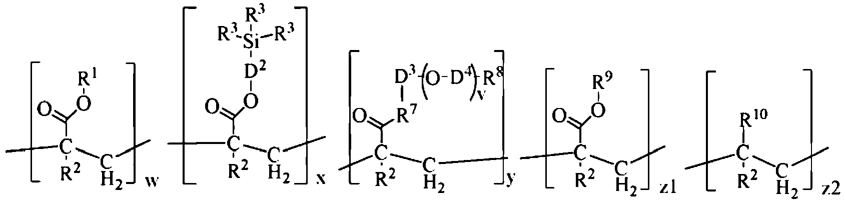 où chaque R¹ est un groupe alkyle choisi indépendamment de 16 à 24 atomes de carbone ; chaque R² est choisi indépendamment dans le groupe constitué de H et méthyle ; chaque D² est un groupe hydrocarboné divalent de 2 à 12 atomes de carbone ; chaque R³ est un groupe de formule OSi(R⁴)₃ ; où chaque R⁴ est choisi indépendamment dans le groupe constitué de R et DSi(R⁵)₃, où chaque R est un groupe hydrocarboné monovalent choisi indépendamment de 1 à 12 atomes de carbone, et chaque D est choisi indépendamment dans le groupe constitué d'un atome d'oxygène, d'un groupe oxyde de (poly)alkylène de 1 à 12 motifs, et d'un groupe hydrocarboné divalent de 2 à 4 atomes de carbone ; chaque R⁵ est choisi indépendamment dans le groupe constitué de R et DSi(R⁶)₃ ; où chaque R⁶ est choisi indépendamment dans le groupe constitué de R et DSiR₃ ; à condition que R⁴, R⁵, et R⁶ soient choisis de telle sorte que le motif macromonomère silicone-(méth)acrylate avec l'indice x ait de 10 à 16 atomes de silicium ; chaque R⁷ est choisi indépendamment dans le groupe constitué d'un atome d'oxygène et NH ; D³ est un groupe hydrocarboné divalent de 1 à 12 atomes de carbone ; D⁴ est un groupe alkylène de 2 à 4 atomes de carbone ou un groupe alkylarylène divalent ; l'indice v représente un nombre de motifs de formule (OD⁴), et l'indice v a une valeur de 0 à 12 ; chaque R⁸ est un groupe réticulable ; chaque R⁹ est un groupe hydrocarboné monovalent de 1 à 14 atomes de carbone ; chaque R¹⁰ est choisi indépendamment dans le groupe constitué d'un halogène, d'un groupe acétate, ou d'un groupe hydrocarboné monovalent de 1 à 14 atomes de carbone ; les indices w, x, y, z1, et z2 représentent les poids relatifs de chaque motif dans le copolymère, l'indice x a une valeur de 0,25 à 15 ; l'indice w a une valeur de 80 à 98,75 ; l'indice y a une valeur de 1 à 5 ; l'indice z1 a une valeur de 0 à 18,75 ; et l'indice z2 a une valeur de 0 à 18,75, et une quantité (w + x + y + z1 + z2) = 100 ; et à condition que le copolymère comprenne en outre un groupement terminal.

2. Procédé de formation d'une émulsion aqueuse du copolymère selon la revendication 1, le procédé comprenant :
1) la copolymérisation de matériaux de départ comprenant
80 % en poids à 98,75 % en poids de (A) un monomère cristallisable de formule 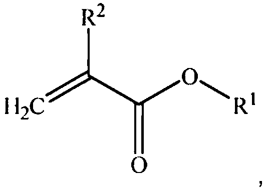 où R¹ et R² sont tels que décrits précédemment ;
0,25 % en poids à 15 % en poids de (B) un macromonomère de silicone-(méth)acrylate de formule 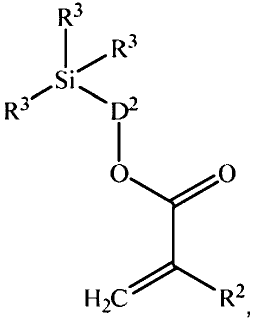 où R², D², et R³ sont tels que décrits précédemment ;
1 % en poids à 5 % en poids de (C) un monomère (méth)acrylate réticulable de formule 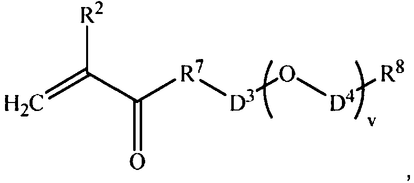 où R⁷, D³, D⁴, l'indice v, et R⁸ sont tels que décrits précédemment ;
(D) un agent tensioactif ;
(E) de l'eau ; et
(I) un initiateur ;
permettant ainsi de former une émulsion aqueuse comprenant (F) un copolymère de silicone-(méth)acrylate, (D) l'agent tensioactif, et (E) l'eau.

3. Procédé selon la revendication 2, où le matériau de départ (A) est choisi dans le groupe constitué d'acrylate de stéaryle, méthacrylate de stéaryle, méthacrylate de béhényle et acrylate de béhényle.

4. Procédé selon la revendication 2 ou la revendication 3, où le produit de départ (B) est choisi dans le groupe constitué de :
méthacrylate de 3-(5-((1,1,1,3,5,5,5-heptaméthyltrisiloxan-3-yl)oxy)-1,1,1,3,7,9,9,9-octaméthyl-3,7-bis((triméthylsilyl)oxy)pentasiloxan-5-yl)propyle ;
méthacrylate de 3-(1,5-bis(2-(1,1,1,5,5,5-hexaméthyl-3-((triméthylsilyl)oxy)trisiloxan-3-yl)éthyl)-3-(((2-(1,1,1,5,5,5-hexaméthyl-3-((triméthylsilyl)oxy)trisiloxan-3-yl)éthyl)diméthylsilyl)oxy)-1,1,5,5-tétraméthyltrisiloxan-3-yl)propyle ; et une combinaison de ceux-ci.

5. Procédé selon l'une quelconque des revendications 2 à 4, où, dans le matériau de départ (C), chaque R⁸ est choisi indépendamment dans le groupe constitué d'hydroxy, amino, époxy, uréido, et acétoxy.

6. Procédé selon l'une quelconque des revendications 3 à 4, où le matériau de départ (C) est le méthacrylate de 2-hydroxyéthyle.

7. Procédé selon l'une quelconque des revendications 3 à 6, dans lequel le matériau de départ (D) est choisi dans le groupe constitué d'un agent tensioactif cationique, d'un agent tensioactif non ionique, et d'une combinaison de ceux-ci.

8. Procédé selon la revendication 7, où l'agent tensioactif cationique comprend un composé d'ammonium quaternaire ; ou l'agent tensioactif non ionique comprend un polyéthylène glycol, un éthoxylate d'alcool, ou une combinaison de ceux-ci.

9. Procédé selon l'une quelconque des revendications 2 à 8, comprenant en outre l'ajout d'un matériau de départ supplémentaire choisi dans le groupe constitué de (H) un agent de transfert de chaîne, (J) un monomère supplémentaire, (K) un inhibiteur, ou une combinaison de deux parmi (H), (J), et (K), ou plus, à l'étape 1).

10. Procédé selon la revendication 9, où (H) l'agent de transfert de chaîne est présent, et l'agent de transfert de chaîne comprend du dodécane thiol.

11. Procédé de préparation d'une formulation d'émulsion appropriée pour le traitement d'un textile, le procédé comprenant :
1) la formation d'une émulsion aqueuse du copolymère selon la revendication 1,
2) la combinaison de l'émulsion aqueuse et du matériau de départ (G) un agent de réticulation hydrodispersible comprenant un isocyanate bloqué.

12. Procédé selon la revendication 11, comprenant en outre un matériau de départ supplémentaire choisi dans le groupe constitué de (L) une cire, (M) un biocide, (N) de l'eau supplémentaire, (O) un ignifugeant, (P) un agent réducteur de plis, (Q) un agent antistatique, (R) un agent de pénétration, ou une combinaison de deux parmi (L), (M), (N), (O), (P), (Q), et (R), ou plus.

13. Formulation d'émulsion appropriée pour le traitement d'un textile, où la formulation d'émulsion comprend : le copolymère de silicone-(méth)acrylate selon la revendication 1, un agent tensioactif, de l'eau, un agent de réticulation hydrodispersible, facultativement (L) une cire, facultativement (M) un biocide, facultativement (N) de l'eau supplémentaire, facultativement (O) un ignifuge, facultativement (P) un agent réducteur de plis, facultativement (Q) un agent antistatique, et facultativement (R) un agent de pénétration.

14. Procédé permettant de traiter un textile, le procédé comprenant :
I) le revêtement du textile par la formulation d'émulsion selon la revendication 13 ; et
II) le chauffage du textile.

15. Procédé de préparation d'une formulation d'émulsion appropriée pour le traitement d'un textile, le procédé comprenant :
1) la copolymérisation de matériaux de départ comprenant
80 % en poids à 98,75 % en poids de (A) un monomère cristallisable de formule 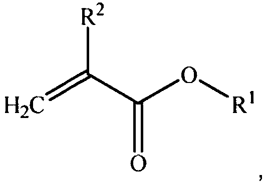 où chaque R¹ est un groupe alkyle choisi indépendamment de 16 à 24 atomes de carbone ; et chaque R² est choisi indépendamment dans le groupe constitué de H et méthyle ;
0,25 % en poids à 15 % en poids de (B) un macromonomère de silicone-(méth)acrylate de formule 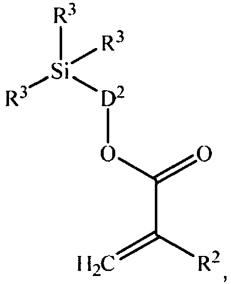 où chaque D² est un groupe hydrocarboné divalent de 2 à 12 atomes de carbone ; chaque R³ est un groupe de formule OSi(R⁴)₃ ; où chaque R⁴ est choisi indépendamment dans le groupe constitué de R et DSi(R⁵)₃, où chaque R est un groupe hydrocarboné monovalent choisi indépendamment de 1 à 12 atomes de carbone, et chaque D est choisi indépendamment dans le groupe constitué d'un atome d'oxygène, d'un groupe oxyde de (poly)alkylène de 1 à 12 motifs, et d'un groupe hydrocarboné divalent de 2 à 4 atomes de carbone ; chaque R⁵ est choisi indépendamment dans le groupe constitué de R et DSi(R⁶)₃ ; où chaque R⁶ est choisi indépendamment dans le groupe constitué de R et DSiR₃ ; à condition que R⁴, R⁵, et R⁶ soient choisis de telle sorte que le macromonomère de silicone-(méth)acrylate ait de 10 à 16 atomes de silicium ; chaque R⁷ est choisi indépendamment dans le groupe constitué d'un atome d'oxygène et NH ; et R² est tel que décrit ci-dessus ;
1 % en poids à 5 % en poids de (C-3) acide (méth)acrylique ;
(D) un agent tensioactif ;
(E) de l'eau ; et
(I) un initiateur ;
permettant ainsi de former une émulsion aqueuse comprenant (F) un copolymère de silicone-(méth)acrylate, (D) l'agent tensioactif, et (E) l'eau ; et
2) la combinaison de l'émulsion aqueuse et du matériau de départ (G) un agent de réticulation hydrodispersible comprenant un isocyanate bloqué.
